# EUROPÄISCHE PATENTSCHRIFT

(11) **EP 1 529 198 B1**
(45) Veröffentlichungstag und Bekanntmachung des Hinweises auf die Patenterteilung: **26.02.2020**
(21) Anmeldenummer: 03787768.5
(22) Anmeldetag: 12.08.2003
(51) Int. Cl.: G01D 5/54, G01F 23/00, G01D 11/24, G01D 21/02, G01F 23/14, G01F 23/284, G01F 23/296, G01F 23/26

(54) **SYSTEM ZUR HERSTELLUNG EINER MODULAR AUGEBAUTEN VORRICHTUNG ZUR BESTIMMUNG EINER PHYSIKALISCHEN PROZESSGRÖSSE UND STANDARDISIERTE KOMPONENTEN**
SYSTEM FOR THE PRODUCTION OF A MODULAR STRUCTURE FOR THE DETERMINATION OF A PHYSICAL PROCESS VARIABLE AND STANDARDISED COMPONENTS
SYSTEME POUR REALISER UN DISPOSITIF DE STRUCTURE MODULAIRE QUI SERT A DETERMINER UNE GRANDEUR DE PROCESSUS PHYSIQUE, ET COMPOSANTS NORMALISES

(30) Priorität: 13.08.2002 US 403622 P
(43) Veröffentlichungstag der Anmeldung: 11.05.2005
(73) Patentinhaber: VEGA Grieshaber KG, 77709 Wolfach (DE)
(72) Erfinder: FEHRENBACH, Josef, 77716 Haslach (DE); MOTZER, Jürgen, 77723 Gengenbach (DE); GRIESSBAUM, Karl, 77796 Mühlenbach (DE)
(74) Vertreter: Maiwald Patent- und Rechtsanwaltsgesellschaft mbH
(86) Internationale Anmeldenummer: PCT/EP2003/008939
(87) Internationale Veröffentlichungsnummer: WO 2004/017025

(56) Entgegenhaltungen:
- CA-A1- 2 281 216
- DE-A- 3 026 899
- GB-A- 2 309 471
- US-A- 4 365 509
- US-A- 4 818 994
- US-A- 5 918 194
- US-B1- 6 295 874
- BUSH D: "TANK GAUGING: WHAT IS IT AND HOW IS IT APPLIED?" MEASUREMENT AND CONTROL, INSTITUTE OF MEASUREMENT AND CONTROL. LONDON, GB, Bd. 28, Nr. 6, 1. Juli 1995 (1995-07-01), Seiten 173-175, XP000521913 ISSN: 0020-2940

## Beschreibung

### TECHNISCHES GEBIET DER ERFINDUNG

Die vorliegende Erfindung betrifft ein System zur Herstellung einer modular aufgebauten Vorrichtung zur Bestimmung einer physikalischen Prozessgröße, wobei zumindest zwei aus dem System zu generierende Vorrichtungen auf unterschiedlichen Messprinzipien beruhen. Des Weiteren betrifft die Erfindung eine Vorrichtung zur Bestimmung der physikalischen Prozessgröße eines Mediums mit mindestens einer Einheit, die derart ausgestaltet und standardisiert ist, dass sie in zumindest zwei verschiedenen Vorrichtungen zur Bestimmung einer physikalischen Prozessgröße eines Mediums einsetzbar ist, bei denen die Prozessgröße auf der Grundlage zweier verschiedener Messprinzipien bestimmt wird. Schließlich betrifft die vorliegende Erfindung des Weiteren einzelne standardisierte Einheiten oder Komponenten oder Module für eine solche Vorrichtung.

### HINTERGRUND DER ERFINDUNG

Eine Vorrichtung zur Bestimmung einer physikalischen Prozessgröße eines Mediums wird üblicherweise auch als Sensor bezeichnet. Derartige Sensoren werden im Allgemeinen bei industriellen Prozesses zur Ermittlung einer Information über diesen Prozess benutzt. In Abhängigkeit von der Beschaffenheit der physikalischen Prozessgröße bzw. der zu ermittelnden Information bedient man sich hierbei verschiedener Messprinzipien.

Es sei hierzu angemerkt, dass unter dem Begriff "physikalische Prozessgröße" im Rahmen der vorliegenden Erfindung beispielsweise der Füllstand eines Mediums in einem Behälter, der Druck eines Mediums in einem Behälter, der Durchfluss eines Mediums durch eine Leitung, die Temperatur, die Dichte oder die Feuchte, oder jede andere Materialkonstante eines Mediums zu verstehen ist. Die vorliegende Erfindung ist jedoch nicht auf die vorher explizit genannten Prozessgrößen beschränkt, sondern betrifft Vorrichtungen zur Bestimmung auch anderer physikalischer Prozessgrößen.

Messprinzipien Im Sinne der vorliegenden Erfindung lassen sich grundsätzlich in kontinuierlich messende Verfahren und Grenzstandmessverfahren unterteilen.

Zu den kontinuierlich messenden Verfahren zählen auf Ultraschall- oder Mikrowellen basierende, kapazitive und druckbasierte Messverfahren. Zu den Grenzstandsmessverfahren zählen Vibrations- und kapazitive Messverfahren. Die mittels diesen an sich bekannten Messverfahren ermittelten Informationen dienen im Wesentlichen dazu, einen Prozess zu überwachen, zu steuern oder zu regeln. So kann man beispielsweise einen Füllstand eines Füllgutes wie folgt messen: kapazitive Füllstandmessung, hydrostatische Füllstandmessung, Füllstandmessung per Ultraschall, Füllstandmessung per Radar, Füllstandmessung mit geführter Mikrowelle, Füllstandmessung mittels Vibration und konduktive Füllstandmessung.

Bei der kapazitiven Füllstandmessung bilden Füllgut und Behälter zusammen mit einer Messsonde einen elektrischen Kondensator. Die Füllhöhe wird durch Messung der Kondensatorkapazität erfasst.

Die hydrostatische Füllstandmessung erfolgt wie folgt. Der hydrostatische Druck wächst mit der Höhe der Flüssigkeitssäule. Ein Druckmessumformer verwendet den gemessenen Druck zur Bestimmung der Füllhöhe. Insbesondere sind hier Druckmessumformer mit überlastfesten metallischen oder keramischen Messzellen geeignet.

Bei den berührungslosen Ultraschall-Füllstandsmessverfahren werden Ultraschallimpulse erzeugt. Ein piezokeramischer Ultraschallwandler sendet periodische Schallimpulse aus, die von der Füllgutoberfläche reflektiert werden.

Über das kombinierte Sende- und Empfangssystem wird aus der gemessenen Laufzeit des Schalls die Füllhöhe errechnet.

Bei der geführten Mikrowelle werden hochfrequente Mikrowellenimpulse oder elektrische Impulse entlang eines Stahlseils geführt. Beim Auftreffen auf die Füllgutoberfläche werden die Impulse reflektiert. Die Laufzeit der Impulse wird von der integrierten Elektronik ausgewertet und als Füllhöhe ausgegeben. Dieses Verfahren wird auch häufig als TDR-Verfahren bezeichnet.

Bei der radarbasierten Füllstandmessung wird die Laufzeit zwischen dem Aussenden und Wiedereintreffen sehr kurzer Mirkowellenimpulse gemessen. Die Zeit ist ein Maß für den Füllstand. Die Füllgutoberfläche wirkt dabei als Reflektor.

Bei der Füllstandmessung mittels Vibration wird ein Vibrationssensor piezoelektrisch in Schwingen versetzt. Durch Berührung mit dem Füllgut wird die Schwingung gedämpft. Die Messelektronik erfasst dadurch das Erreichen des Grenzstands.

Schließlich wird bei der konduktiven Füllstandmessung beim Kontakt eines Füllguts mit der Messsonde ein Stromgreis geschlossen und ein Schaltbefehl ausgelöst. Das konduktive Messprinzip dient zur wirtschaftlichen Grenzstanderfassung bei elektrisch leitfähigen Flüssigkeiten.

Als druckbasierte Messverfahren lassen sich beispielsweise das Verfahren mittels Prozessdruckerfassung oder das Verfahren mittels Differenzdruckerfassung nennen. Bei dem Verfahren mittels Prozessdruck wird der Druck in Rohrleitungen oder Behältern mit einer ölfreien metallischen oder keramischen Messzelle erfasst und beispielsweise in ein 4-20 mA umgeformt. Beim Differenzdruckmessprinzip wird der Differenzdruck über Keramik- oder Siliziummetallmesszellen gemessen und in ein vorzugsweise 4 - 20 mA Signal umgeformt.

Zusammenfassend kann man beispielsweise Messprinzipien im Sinne der vorliegenden Anmeldung wie folgt unterscheiden: a) Laufzeitmessung von frei abgestrahlten oder geführten und an einem Füllgut reflektierten elektromagnetischen Wellen wie Mikrowellen oder Ultraschallwellen, b) Messung einer Kapazität eines Füllguts, c) Messung eines hydrostatischen Drucks oder eines hydrostatischen Differenzdrucks, d) Grenzstandmessung mittels Vibration oder auf konduktivem Weg, e)Temperaturmessung, f)Durchflussmessung.

Zur Erfüllung spezieller Aufgaben und in Hinblick auf die Einsatzbedingungen muss ein solcher Sensor gewissen Anforderungen genügen bzw. gewissen industriellen Standards entsprechen. Diese Standards umfassen Anforderungen bezüglich der Widerstandsfähigkeit der Sensoren gegenüber rauen industriellen Umgebungsbedingungen bzw. gegenüber den zu messenden Medien. Eine weitere Anforderung ist die Montierbarkeit und Adaption der Sensoren an den Prozess. Darüber hinaus gilt es Anforderungen bezüglich des elektrischen Anschlusses der Sensoren, der Ausgabe der ermittelten Informationen und der Einhaltung bestimmter Sicherheitsbestimmungen der Sensoren, wie z.B. Explosionsschutz-Vorschriften (Ex-Trennung) einzuhalten.

Um diesen und weiteren Standards zu entsprechen, ergibt sich jeweils ein bestimmter prinzipieller funktionaler Aufbau eines Sensors, der durch bestimmte Funktionseinheiten gekennzeichnet sein kann. Zu diesen gehören unter anderem jeweils eine Sensoreinheit, eine Sensorelektronikeinheit, eine Auswerteeinheit, eine Kommunikationseinheit, eine Spannungsversorgungseinheit, eine Befestigungseinheit, auch Prozessanschluss genannt, sowie eine Gehäuseeinheit.

Die auf einem mechanischen oder elektromechanischen Prinzip basierende Sensoreinheit bzw. das hierin enthaltene Sensorelement wandelt die physikalische Messgröße in eine elektrische Messgröße um, wozu es direkten oder indirekten Kontakt mit dem jeweiligen Medium aufnimmt. Das so erzeugte elektrische Messsignal, das für die jeweilige physikalische Messgröße repräsentativ ist, wird anschließend von der Sensorelektronikeinheit weiter verarbeitet. Die Sensorelektronikeinheit ist eine sensorspezifische Schaltungseinheit und muss daher an das jeweilige Sensorelement angepasst sein. Die Sensorelektronikeinheit verarbeitet das elektrische Messgrößensignal derart weiter, dass sie beispielsweise das elektrische Messsignal verstärkt, filtert oder in ein digitales Messsignal umwandelt.

Der Sensorelektronikeinheit ist eine Auswerteeinheit nachgeschaltet, die aus dem von der Sensorelektronikeinheit aufbereiteten Messsignal die gewünschte Information bezüglich der Prozessgröße des Mediums bildet. Der so gebildete Messwert wird von dem Sensor über eine der Auswerteeinheit nachgeschaltete Kommunikationseinheit einem Prozessleitsystem über beispielsweise einen Feldbus oder eine Zweidrahtschleife mitgeteilt. Die Sensoreinheit, die Sensorelektronikeinheit, die Auswerteeinheit und die Kommunikationseinheit sind oft in einem einzigen Gehäuse untergebracht und werden von einer ebenfalls in dem Gehäuse untergebrachten Spannungsversorgungseinheit mit Spannung bzw. Strom versorgt. Das Gehäuse bzw. die gesamte Vorrichtung, ist über eine Befestigungseinheit, auch als Prozessanschluss bezeichnet, an einem Behälter oder Wandteil befestigbar.

Wie bereits ausgeführt, muss jeder Sensor einem gewissen Sicherheitskonzept entsprechen, das all diese Funktionseinheiten umfasst. Es muss daher ein Sicherheitskonzept für jeden Sensor erstellt werden, das verschiedenen Sensorkomponenten bzw. deren Gestaltung Rechnung trägt.

Bedingt durch die Vielzahl unterschiedlicher Messgrößen und durch die dadurch bedingten Messverfahren zur Umwandlung von physikalischen Prozessgrößen in elektrische Informationen ist es bisher üblich, für jede Messaufgabe einen spezifischen Sensor mit eigenständigem Design und an die jeweilige Messaufgabe speziell angepassten Funktionseinheiten sowie mechanischen Komponenten zu entwickeln und herzustellen. Durch diese individuelle und sensorspezifische Geräteentwicklung und -fertigung können Sensoren angeboten werden, die optimal an ihre Messaufgabe und den Einsatzbedingungen angepasst sind.

Ein großer Nachteil, den eine solche Vorgehensweise mit sich bringen kann, ist der hohe Entwicklungsaufwand und die teilweise sehr große Vielzahl an Komponenten und Funktionseinheiten, die bei jeder neu zu entwickelnden Sensorgeneration anfallen. Dieser hohe Entwicklungsaufwand stellt jedoch für Hersteller, die sich nicht auf einen einzigen Sensor spezialisiert haben, sondern eine ganze Palette an möglicherweise verwandten, aber doch unterschiedlichen Sensoren anbieten, einen hohen Kostenaufwand dar. Auch seitens der Anwender kann durch die Vielfalt von Komponenten und Funktionseinheiten der zu erbringende Aufwand erhöht werden, wenn beispielsweise die Bedienung oder die Anbringung für jeden Sensor unterschiedlich ist.

Aus der US 6,295,874 B1 bzw. der zugehörigen WO 01/18502 A1 dürfte nach diesseitigem Verständnis eine Vorrichtung zur Bestimmung einer physikalischen Prozessgröße bekannt sein, bei der die Prozessgröße mittels eines Laufzeitverfahrens ermittelt wird. Die hierin gezeigte Vorrichtung kann eine Auswerteeinheit umfassen, die von dem verwendeten Sensor im wesentlichen unabhängig sein soll. Allerdings wird nach diesseitigem Verständnis dieses Dokuments die Lehre gegeben, einen Sensor, der nach dem Laufzeitprinzip arbeitet, einzusetzen. Darüber hinaus wird eine vom jeweils verwendeten Sensor unabhängige Kommunikationseinheit für den Datenaustausch mit einer entfernten Prozessleitstelle vorgeschlagen. Allerdings ist auch hier festzustellen, dass die Kommunikationseinheit zur Kombination mit einem Sensor, der auf dem Prinzip der Laufzeitmessung basiert, bestimmt ist.

Ein Prospekt der Firma Krohne/Deutschland zeigt wohl einen modularen Aufbau eines Füllstandradarsensors. Hier werden verschiedenen Sensoreinheiten eines Füllstandradarsensors wie Hornantenne, Waveguide oder Wavestick unter zu Hilfenahme eines Distanzstück mit zwei verschiedenen Sensorgehäusen mit entsprechender Elektronik kombiniert. Auch hier wiederum wird nach dem technischen Verständnis der Erfinder nur eine gewisse Variabilität bei der Herstellung eines Füllstandradarsensors gelehrt.

Schließlich ist aus einem Sonderdruck mit dem Titel "Lego für Erwachsene", Rolf Hauser, Zeitschrift Messtek, Steuern, Regeln, Automatisieren, Messen, August 1999 die Integration absolut ölfreier Messzellen in ein modulares System von Prozessanschlüssen, Gehäusen, Signalübertragungsarten, Abgleichmöglichkeiten verbunden mit dem Anwenderkomfort eines intelligenten Bediensystems bekannt. Hier werden verschiedene Drucksensoren vorgestellt, die mit verschiedenen Gehäusen kombinierbar sind. Wiederum ist hier die Modularität allem Anschein nach auf ein Messprinzip beschränkt.

Die US5918194 zeigt ein Mess-System mit einem Input-Modul. Das Modul umfasst eine Vielzahl von Mess-Sensoren.

Die US4818994 zeigt einen Sender für die Steuerung von industriellen Prozessen. Der Sender hat einen modularen Aufbau, mit einem Detektormodul und einem Ausgangsmodul, die elektrisch durch einen seriellen Bus miteinander verbunden sind.

### DARSTELLUNG DER ERFINDUNG

Der Erfindung ist gemäß beiliegenden Ansprüchen.

Gemäß einem ersten Aspekt wird ein System zur Herstellung verschiedener Versionen einer modular aufgebauten Vorrichtung zur Bestimmung einer physikalischen Prozessgröße, wobei zumindest zwei aus dem System zu generierende Vorrichtungen auf unterschiedlichen Messprinzipien beruhen. Das System kann umfassen: eine Anzahl von Sensoreinheiten, wobei jeweils eine Sensoreinheit zum Erfassen einer bestimmten physikalischen Prozessgröße und zum Wandeln dieser Prozessgröße in ein elektrisches Messsignal ausgestaltet ist, und wobei sich zumindest zwei der Anzahl von Sensoreinheiten in dem ihnen zugrunde liegenden Messprinzip unterscheiden; zumindest eine Auswerteeinheit zum Auswerten und Generieren eines die physikalische Prozessgröße repräsentierenden Prozessgrößensignals aus dem Messsignal einer Sensoreinheit, wobei die Auswerteeinheit zum Verbinden mit einer oder mehreren der Sensoreinheiten ausgebildet und standardisiert ist; zumindest eine Kommunikationseinheit zur Ausgabe des Prozessgrößensignals, wobei die Kommunikationseinheit zum Verbinden mit einer oder mehreren der Auswerteeinheiten ausgebildet und standardisiert ist; zumindest eine Spannungsversorgungseinheit, die zur Spannungsversorgung der Vorrichtung zur Bestimmung einer physikalischen Prozessgröße dient, wobei die Spannungsversorgungseinheit zur Spannungsversorgung zumindest zweier Versionen einer modularen Vorrichtung ausgebildet und standardisiert ist; zumindest eine Gehäuseeinheit, die zur Aufnahme zumindest mehrerer Einheiten aus der Gruppe von Einheiten bestehend aus zumindest der Auswerteeinheit, der Kommunikationseinheit und der Spannungsversorgungseinheit ausgebildet und standardisiert ist; und eine Anzahl von Befestigungseinheiten zum Anbringen der Vorrichtung zur Bestimmung einer physikalischen Prozessgröße an einem Behälter- oder Wandteil, wobei die Befestigungseinheiten sich in Hinblick auf die jeweiligen Gegebenheiten am Behälter oder Wandteil unterscheiden.

In einer beispielhaften Ausführungsform weist das System des Weiteren zumindest eine Sensorelektronikeinheit zum elektronischen Aufbereiten des elektrischen Messsignals einer Sensoreinheit in ein digitales Messsignal auf. Hierbei kann zumindest eine der Sensorelektronikeinheiten derart ausgestaltet und standardisiert sein, dass sie mit zumindest zwei sich unterscheidenden, insbesondere auf unterschiedlichen Messprinzipien beruhenden Sensoreinheiten verbindbar ist.

In einer weiteren beispielhaften Ausführungsform des Systems sind die Sensorelektronikeinheit und die Auswerteeinheit in einem Modul integriert.

In einer weiteren beispielhaften Ausführungsform des Systems sind die Sensorelektronikeinheit und die Auswerteeinheit auf einer oder mehreren Platinen untergebracht.

In einer weiteren beispielhaften Ausführungsform des Systems ist die zumindest eine Gehäuseeinheit zur Aufnahme zumindest mehrerer Einheiten aus der Gruppe von Einheiten bestehend aus zumindest der Sensorelektronikeinheit, der Auswerteeinheit, der Kommunikationseinheit und der Spannungsversorgungseinheit ausgebildet und standardisiert.

In einer weiteren beispielhaften Ausführungsform des Systems umfasst die Anzahl der sich unterscheidenden Sensoreinheiten zur Bestimmung der physikalischen Prozessgröße zumindest zwei sich unterscheidende Sensoreinheiten, die auf unterschiedlichen Messprinzipien beruhen, wie beispielsweise Laufzeitmessung von frei abgestrahlten oder geführten und an einem Füllgut reflektierten elektromagnetischen Wellen wie Mikrowellen oder Ultraschallwellen, Messung einer Kapazität eines Füllguts, Messung eines hydrostatischen Drucks oder eines hydrostatischen Differenzdrucks, Grenzstandmessung, Temperaturmessung, Durchflussmessung.

In einer weiteren beispielhaften Ausführungsform des Systems sind mehrere Gehäuseeinheiten vorhanden, die jeweils für einen spezifischen Einsatzzweck individualisiert sind, aber zum Koppeln mit allen Sensoreinheiten ausgebildet und standardisiert sind.

In einer weiteren beispielhaften Ausführungsform des Systems unterscheiden sich die Gehäuseeinheiten durch das verwendete Material.

In einer weiteren beispielhaften Ausführungsform des Systems unterscheiden sich die Gehäuseeinheiten durch die Anschlussausbildungen für Fernübertragungsverbindungen.

In einer weiteren beispielhaften Ausführungsform des Systems sind die einzelnen Sensoreinheiten der Anzahl von Sensoreinheiten für einen spezifischen Einsatzzweck individualisiert, aber zum Koppeln mit allen Sensoreinheiten ausgebildet und standardisiert.

In einer weiteren beispielhaften Ausführungsform des Systems ist die Anzahl von Sensoreinheiten aus der Gruppe bestehend aus mehreren der folgenden Komponenten wählbar:
a) Hornantenne und zugehöriger Elektronik zum Aussenden und Empfangen von Ultraschall- oder Mikrowellen,
b) Stabantenne und zugehöriger Elektronik zum Aussenden und Empfangen von Ultraschall- oder Mikrowellen,
c) Stab- oder Seilsonde und zugehöriger Elektronik
d) Schwinggabel und zugehöriger Elektronik,
e) kapazitives Messsondenelement und zugehöriger Elektronik,
f) Temperatursensorelement und zugehöriger Elektronik,
g) Drucksensorelement mit zugehöriger Elektronik.

In einer weiteren beispielhaften Ausführungsform des Systems ist die Kommunikationseinheit zur digitalen Kommunikation mit einem Bus-System ausgebildet.

In einer weiteren beispielhaften Ausführungsform des Systems ist die Kommunikationseinheit zur Kommunikation über eine Zweileiter-Schleife ausgebildet.

In einer weiteren beispielhaften Ausführungsform umfasst das System mehrere Spannungsversorgungseinheiten, die zum Anschluss an eine Zweileiterschleife, eine Vierleiterschleife oder ein Digitalbussystem individualisiert sind, wobei diese verschiedenen Spannungsversorgungseinheiten standardisierte Abmessungen zum Anschluss in einer der Versionen von modularen Vorrichtungen aufweisen.

In einer weiteren beispielhaften Ausführungsform des Systems ist eine der Spannungsversorgungseinheiten derart ausgelegt, dass nachgeschaltete Einheiten mit einer Spannung in Höhe von 3V, 5Voder 15V versorgt werden können.

In einer weiteren beispielhaften Ausführungsform umfasst das System des Weiteren ein Anzeige- und Bedienmodul, das an zumindest mehreren sich unterscheidenden Gehäuseeinheiten lösbar anbringbar ist und hierfür entsprechend ausgebildet und standardisiert ist.

In einer weiteren beispielhaften Ausführungsform des Systems umfasst das Anzeige- und Bedienmodul eine Befestigungseinrichtung und eine elektrische Verbindungseinrichtung, wobei die Befestigungseinrichtung mit einer standardisierten Aufnahmeeinrichtung an den Gehäuseeinheiten koppelbar ist, und wobei die elektrische Verbindungseinrichtung mit einer hiermit korrespondierenden elektrischen Verbindungseinrichtung an den Gehäuseeinheiten zu paaren ist.

In einer weiteren beispielhaften Ausführungsform des Systems ist das Anzeige- und Bedienmodul in unterschiedlichen Positionen oder Ausrichtungen an den Gehäuseeinheiten lösbar befestigbar.

In einer weiteren beispielhaften Ausführungsform des Systems sind ein oder mehrere Software-Module zum Betreiben einer der Einheiten aus der Gruppe von Einheiten bestehend aus zumindest der Sensorelektronikeinheit, der Auswerteeinheit, der Kommunikationseinheit und der Spannungsversorgungseinheit zur Verwendung in zumindest zwei verschiedenen Versionen von modular aufgebauten Vorrichtung zur Bestimmung einer physikalischen Prozessgröße standardisiert.

Gemäß einem zweiten Aspekt wird eine Vorrichtung zur Bestimmung einer physikalischen Prozessgröße bereitgestellt, die umfasst: eine Sensoreinheit zum Erfassen der zu bestimmenden physikalischen Prozessgröße und zum Wandeln dieser Prozessgröße in ein elektrisches Messsignal, eine Auswerteeinheit zum Auswerten und Generieren eines eine physikalische Prozessgröße repräsentierenden Prozessgrößensignals aus dem elektrischen Messsignal der Sensoreinheit, eine Kommunikationseinheit zur Ausgabe des Prozessgrößensignals, eine Spannungsversorgungseinheit, die zur Spannungsversorgung der Vorrichtung zur Bestimmung der physikalischen Prozessgröße dient, eine Gehäuseeinheit, die zur Aufnahme zumindest mehrerer Einheiten aus der Gruppe von Einheiten bestehend aus Auswerteeinheit, Kommunikationseinheit und Spannungsversorgungseinheit ausgebildet ist, und eine Befestigungseinheit zum Anbringen der Vorrichtung zur Bestimmung der physikalischen Prozessgröße an einem Behälter oder Wandteil. Zumindest eine Einheit aus der Gruppe von Einheiten bestehend aus Auswerteeinheit, Kommunikationseinheit, Spannungsversorgungseinheit, Gehäuseeinheit und Befestigungseinheit ist hierbei derart ausgestaltet und standardisiert, dass sie in Vorrichtungen zur Bestimmung einer physikalischen Prozessgröße verwendbar ist, die unterschiedliche Sensoreinheiten aufweisen, die sich in dem ihnen zugrunde liegenden Messprinzip unterscheiden.

In einer ersten beispielhaften Ausführungsform der Vorrichtung ist eine Sensorelektronikeinheit zum elektronischen Aufbereiten des elektrischen Messsignals der Sensoreinheit in ein digitales Messsignal zwischen der Sensoreinheit und der Auswerteeinheit zwischengeschaltet.

In einer weiteren beispielhaften Ausführungsform der Vorrichtung betrifft die Standardisierung der Einheiten die mechanischen Anschlüsse der Einheiten untereinander.

In einer weiteren beispielhaften Ausführungsform der Vorrichtung betrifft die Standardisierung der Einheiten die elektrischen Anschlüsse der Einheiten untereinander.

In einer weiteren beispielhaften Ausführungsform der Vorrichtung ist die Spannungsversorgungseinheit aus einer Gruppe von standardisierten Spannungsversorgungseinheiten wählbar, wobei die Gruppe von standardisierten Spannungsversorgungseinheiten zumindest eine Spannungsversorgungseinheit zum Anschluss an eine Zweileiterschleife, eine Spannungsversorgungseinheiten zum Anschluss an eine Vierleiterschleife und eine Spannungsversorgungseinheiten zum Anschluss an ein Digitalbussystem umfasst, und wobei diese verschiedenen Spannungsversorgungseinheiten standardisierte Abmessungen zum Anschluss in einer der Versionen von modularen Vorrichtungen aufweisen.

In einer erfindungsgemässen Ausführungsform der Vorrichtung umfasst die Gehäuseeinheit ein Aufnahmeteil mit elektrischen und mechanischen Anschlüssen, in dem ein Anzeige- und Bedienmodul lösbar anbringbar ist.

In einer weiteren beispielhaften Ausführungsform der Vorrichtung ist die Auswerteeinheit derart ausgestaltet und standardisiert ist, dass sie mit Sensoreinheiten betreibbar ist, die auf der Grundlage unterschiedlicher Messprinzipien arbeiten.

In einer weiteren beispielhaften Ausführungsform der Vorrichtung ist die Kommunikationseinheit derart ausgestaltet und standardisiert, dass sie mit Sensoreinheiten betreibbar ist, die auf der Grundlage unterschiedlicher Messprinzipien arbeiten.

In einer weiteren beispielhaften Ausführungsform derVorrichtung weist die Kommunikationseinheit zumindest eine IIC-Bus-Schnittstelle auf, an die eine Anzeige- und Bedieneinheit oder ein Computer anschließbar ist.

Gemäß einem weiteren Aspekt wird eine Gehäuseeinheit einer Vorrichtung zur Bestimmung einer physikalischen Prozessgröße vorgeschlagen, wobei die Gehäuseeinheit derart ausgestaltet und standardisiert ist, dass sie sowohl mit einer ersten Sensoreinheit als auch mit einer zweiten Sensoreinheit koppelbar ist. Die erste Sensoreinheit zum Erfassen einer bestimmten physikalischen Prozessgröße und zum Wandeln dieser Prozessgröße in ein elektrisches Messsignal basiert hier auf einem ersten Messprinzip wohingegen die zweite Sensoreinheit zum Erfassen einer bestimmten physikalischen Prozessgröße und zum Wandeln dieser Prozessgröße in ein elektrisches Messsignal basiert auf einem zweiten Messprinzip basiert, das sich von dem ersten Messprinzip unterscheidet.

Eine Gehäuseeinheit kann beispielsweise alle elektrischen Funktionselemente umgeben und diese vor möglichen Umwelt- und Umgebungseinflüssen schützen.

In einer weiteren beispielhaften Ausführungsform der Gehäuseeinheit nimmt die Gehäuseeinheit zumindest mehrere Einheiten aus der Gruppe von Einheiten zumindest bestehend aus einer Auswerteeinheit, einer Kommunikationseinheit und einer Spannungsversorgungseinheit auf.

In einer weiteren beispielhaften Ausführungsform der Gehäuseeinheit weist die Gehäuseeinheit eine Aufnahmeeinrichtung zur lösbaren Befestigung eines Anzeige-und Bedienmoduls auf.

In einer weiteren beispielhaften Ausführungsform der Gehäuseeinheit ist die Aufnahmeeinrichtung derart ausgestaltet, dass das Anzeige- und Bedienmodul in verschiedenen Positionen an der Gehäuseeinheit lösbar befestigbar ist.

Gemäß einem weiteren Aspekt wird eine Auswerteeinheit für eine Vorrichtung zur Bestimmung einer physikalischen Prozessgröße vorgeschlagen, wobei die Auswerteeinheit derart ausgestaltet und standardisiert ist, dass sie sowohl mit einer ersten Sensoreinheit als auch mit einer zweiten Sensoreinheit koppelbar ist. Wiederum basiert die erste Sensoreinheit zum Erfassen einer bestimmten physikalischen Prozessgröße und zum Wandeln dieser Prozessgröße in ein elektrisches Messsignal auf einem ersten Messprinzip wohingegen die zweite Sensoreinheit zum Erfassen einer bestimmten physikalischen Prozessgröße und zum Wandeln dieser Prozessgröße in ein elektrisches Messsignal auf einem zweiten Messprinzip beruht. Wie zuvor erwähnt, unterscheiden sich wiederum das erste und das zweite Messprinzip voneinander.

Gemäß einem weiteren Aspekt wird eine Kommunikationseinheit für eine Vorrichtung zur Bestimmung einer physikalischen Prozessgröße bereitgestellt, wobei die Kommunikationseinheit derart ausgestaltet und standardisiert ist, dass diese sowohl mit einer ersten Sensoreinheit als auch mit einer zweiten Sensoreinheit koppelbar ist. Wiederum basiert die erste Sensoreinheit zum Erfassen einer bestimmten physikalischen Prozessgröße und zum Wandeln dieser Prozessgröße in ein elektrisches Messsignal auf einem ersten Messprinzip und die zweite Sensoreinheit zum Erfassen einer bestimmten physikalischen Prozessgröße und zum Wandeln dieser Prozessgröße in ein elektrisches Messsignal basiert auf einem zweiten Messprinzip. In gleicher Weise wie zuvor erwähnt, unterscheiden sich wiederum das erste und das zweite Messprinzip voneinander.

Gemäß noch einem weiteren Aspekt wird eine Spannungsversorgungseinheit für eine Vorrichtung zur Bestimmung einer physikalischen Prozessgröße bereitgestellt, wobei die Spannungsversorgungseinheit derart ausgestaltet und standardisiert ist, dass diese sowohl mit einer ersten Sensoreinheit als auch mit einer zweiten Sensoreinheit koppelbar ist. Auch hier arbeitet die erste Sensoreinheit zum Erfassen einer bestimmten physikalischen Prozessgröße und zum Wandeln dieser Prozessgröße in ein elektrisches Messsignal gemäß einem ersten Messprinzip wohingegen die zweite Sensoreinheit zum Erfassen einer bestimmten physikalischen Prozessgröße und zum Wandeln dieser Prozessgröße in ein elektrisches Messsignal gemäß einem zweiten Messprinzip arbeitet. In gleicher Weise wie zuvor erwähnt, unterscheiden sich wiederum das erste und das zweite Messprinzip voneinander.

Erstmals wird also gemäß einem ersten grundsätzlichen Aspekt der Erfindung ein Messwertprinzip übergreifender modularer Aufbau einer Vorrichtung zur Bestimmung einer physikalischen Prozessgröße vorgeschlagen. Damit kann eine Art Plattform zur Herstellung solcher Vorrichtungen geschaffen werden, die die Entwicklung und Herstellung verschiedenster Sensoren und deren Komponenten vereinfachen. Der Entwickler als auch der Anwender können so je nach Messaufgabe, Einsatzgebiet, Umgebungsbedingungen sowie weiterer Randbedingungen gewisse Einheiten untereinander sinnvoll im Sinne eines "Baukastensystems" kombinieren, ohne - wie bisher - an das eigentliche Messprinzip gebunden zu sein. Dabei muss die Funktionsaufteilung der einzelnen Einheiten nicht zwangsläufig mit der Einteilung entsprechender Software-Module korrelieren.

Ein Vorteil kann darin bestehen, dass die Entwicklungszeit und der Aufwand bei der Entwicklung neuer Sensoren reduziert werden kann, wodurch auch eine Kostenminimierung bei der Herstellung auf verschiedenen Messprinzipien beruhenden Vorrichtungen zur Bestimmung einer physikalischen Prozessgröße ermöglicht werden könnte.

Eine Befestigungseinheit oder Prozessanschluss umfasst beispielsweise einen Flansch oder ein Gewinde. Bei der Flanschausbildung wird der gesamte Sensor an einen entsprechenden Gegenflansch eines Behälters geschraubt. Ein anderes Beispiel für einen Prozessanschluss ist ein Einschraubgewinde, mit dem der Sensor in ein Gegengewinde des Behälters eingeschraubt und befestigt wird. Da der Prozessanschluss im Allgemeinen in engem Zusammenhang mit dem Gehäuse steht, können nun erstmals die mechanischen Schnittstellen der beiden Einheiten jeweils aufeinander abgestimmt und standardisiert sein. Der Prozessanschluss kann jedoch auch Teil des Gehäuses oder fest mit diesem verbunden sein.

Das mechanische oder elektromechanische Sensorelement kann in oder an dem Gehäuse angebracht werden und steht in Wechselwirkung mit dem Medium, dessen physikalische Prozessgröße ermittelt werden soll. Häufig ist es auch so mit dem Prozessanschluss kombiniert, so dass es bei der Montage in den Behälter ragt oder an der Behälterwandung anliegt. Das Sensorelement wandelt die zu ermittelnde Prozessgröße des Mediums in eine elektrische Messgröße um.

Das auf einer der vorbeschriebenen Art und Weisen ermittelte Prozessgrößensignal kann beispielsweise über eine standardisierte Schnittstelle einer Sensorelektronikeinheit an eine Auswerteinheit übergeben werden. Die Sensorelektronikeinheit ist ein sensorspezifisches Schaltungsteil und muss daher auf das jeweilige Sensorelement abgestimmt werden. Die Sensorelektronikeinheit enthält Hard- und gegebenenfalls auch Software zur Umwandlung der primären elektrischen Messgröße in einen standardisierten elektrischen Messwert.

Zum Zweck dieser Standardisierung kann die Sensorelektronikeinheit unter anderem beispielsweise einen Mikroprozessor mit Peripherie (RAM, ROM, EEPROM, A/D-Wandler), diverse Filter oder einen Verstärker enthalten. Die Verarbeitung und Standarisierung der Signale kann, wie bereits erwähnt, rein mit Hardwarekomponenten oder nach einer Analog-Digital-Wandlung auf digitaler Ebene in Form eines Programmablaufs des Mikroprozessors erfolgen.

Da die meisten Sensorelemente nur ein elektrisches Signal abgeben, wenn sie dazu veranlasst werden, werden sie von der Sensorelektronikeinheit mittels eines Anregesignals dazu veranlasst. Hierfür enthält die Sensorelektronikeinheit beispielsweise zusätzlich eine Signalerzeugungsvorrichtung wie z. B. einen Oszillator oder einen Sender.

Der von der Sensorelektronikeinheit standardisierte Messwert wird anschließend von der Auswerteeinheit in die gewünschte Information über die Prozessgröße gewandelt, die als elektrisches Signal der Kommunikationseinheit übergeben wird. Dazu sind in der Auswerteeinheit im EEPROM sensorspezifische Kalibrier- und Abgleichswerte gespeichert, mit Hilfe derer der Mikroprozessor die physikalische Prozessgröße bestimmt. Diese Auswertung erfolgt vorzugsweise mit Hilfe eines Programmablaufs auf der Basis einer Mikroprozessor-Hardware.

Um einen Sensor für eine spezielle Messaufgabe zu kalibrieren und abzugleichen, werden über die Kommunikationseinheit Kalibrier- und Abgleichswerte dem Sensor mitgeteilt, wo sie im EEPROM dauerhaft gespeichert werden können.

Die Kommunikationseinheit dient der Ausgabe der gewünschten Informationen, die der Sensor ermittelt, und der Eingabe der genannten Kalibrier- und Abgleichswerte bzw. der Parametrierung des Sensors. Im einfachsten Fall weist die Kommunikationseinheit eine Anzeige sowie Tasten zur Eingabe auf. Sie kann jedoch ebenso Schnittstellen zur Anbindung des Sensors an ein übliches Feldbussystem aufweisen. Über dieses Feldbussystem ist der Sensor beispielsweise mit einer Prozessleitstelle verbunden.

Die Spannungsversorgungseinheit dient der Funktion, die elektrische Anschlussspannung des Sensors, die beispielsweise von einer externen Versorgungseinheit innerhalb des Prozessleitsystems bereitgestellt wird, in geeignete stabilisierte Spannungen zu transformieren (z. B. 3 Volt, 5V und 15 Volt), die zur Versorgung der elektrischen Funktionseinheiten des Sensors notwendig sind.

Das gesamte Konzept des Sensors unterliegt gewissen Sicherheitsrichtlinien, wie beispielsweise den Bestimmungen zur Vermeidung von Explosionen (Ex-Trennung). Dieses Sicherheitskonzept umfasst alle Funktionseinheiten und kann auf unterschiedlichen Orten umgesetzt werden. Je nach Art der Umsetzung ergeben sich bestimmte Anforderungen an verschiedene Funktionseinheiten des Sensors, z. B. Anforderungen an das Gehäuse oder Beschränkung der von den elektrischen Schaltkreisen aufgenommenen Leistung. Erstmals könnten nun beispielsweise erfindungsgemäß Messprinzip übergreifend entsprechende Gehäuseausbildungen, Schaltungsteile etc. einheitlich in Hinblick auf diese Sicherheitsanforderungen gestaltet werden.

Die vorliegende Erfindung kann sich also beispielsweise dadurch besonders als vorteilhaft erweisen, dass durch die Kombination der jeweiligen Sensoreinheit mit dem gewünschten Prozessanschluss und dem jeweiligen Gehäuse die Entwicklung und spätere Herstellung verschiedener Füllstand- und anderer Messsensoren auf eine gemeinsame Basis gestellt ist. Nochmals, ein großer Vorteil der Erfindung könnte also sein, dass für auf unterschiedlichen Messprinzipien basierenden Vorrichtungen bzw. Sensoren auf teilweise von dem jeweiligen Messprinzip unabhängige vorgefertigte Komponenten zurückgegriffen werden kann.

Ein weiterer Vorteil, der sich durch den Messprinzip übergreifenden modularen Aufbau einer Vorrichtung ergibt kann, besteht darin, dass die zum Zusammenbau eines Sensors erforderliche Zeit erheblich verkürzt wird, was wiederum eine Kostenersparnis zur Folge hat.

Weiterhin kann es sich für einen Anwender von verschiedenen Sensoren, die auch auf unterschiedlichen Messprinzipien beruhen als vorteilhaft erweisen, dass durch die Erfindung Sensoren ein einheitliches Aussehen verliehen und der Anschluss sowie das Bedienkonzept der Sensoren vereinheitlicht werden kann.

### KURZE BESCHREIBUNG DER ZEICHNUNGEN

Im Folgenden werden zum besseren Verständnis und zur weiteren Erläuterung mehrere Ausführungsbeispiele der vorliegenden Erfindung unter Bezugnahme auf die beigefügten Zeichnungen näher beschrieben. Es zeigt:
- Fig. 1: schematisch einen standardisierten allgemeinen Aufbau eines Sensors gemäß der vorliegenden Erfindung,
- Fig. 2: einen beispielhaften grundsätzlichen Umfang von einzelnen Komponenten oder Einheiten eines Systems gemäß der vorliegenden Erfindung,
- Fig. 3: einige elektrischen Funktionseinheiten eines beispielhaften Systems gemäß der vorliegenden Erfindung,
- Fig. 4: einige einzelne Hardwarekomponenten eines beispielhaften Systems gemäß der vorliegenden Erfindung,
- Fig. 5: ein Funktionsschaltbild einer beispielhaften Ausführungsform einer erfindungsgemäßen Vorrichtung,
- Fig. 6: ein Funktionsschaltbild einer weiteren beispielhaften Ausführungsform einer erfindungsgemäßen Vorrichtung,
- Fig. 7: eine Explosionsdarstellung einer weiteren beispielhaften Ausführungsform einer erfindungsgemäßen Vorrichtung, und
- Fig. 8: einen Längsschnitt einer weiteren beispielhaften Ausführungsform einer erfindungsgemäßen Vorrichtung.

Es sei hier noch angemerkt, dass in allen Figuren einander entsprechende Teil, Komponenten oder Einheiten mit den gleichen Bezugszeichen gekennzeichnet sind.

### BESCHREIBUNG VON BEISPIELHAFTEN AUSFÜHRUNGSFORMEN DER VORLIEGENDEN ERFINDUNG

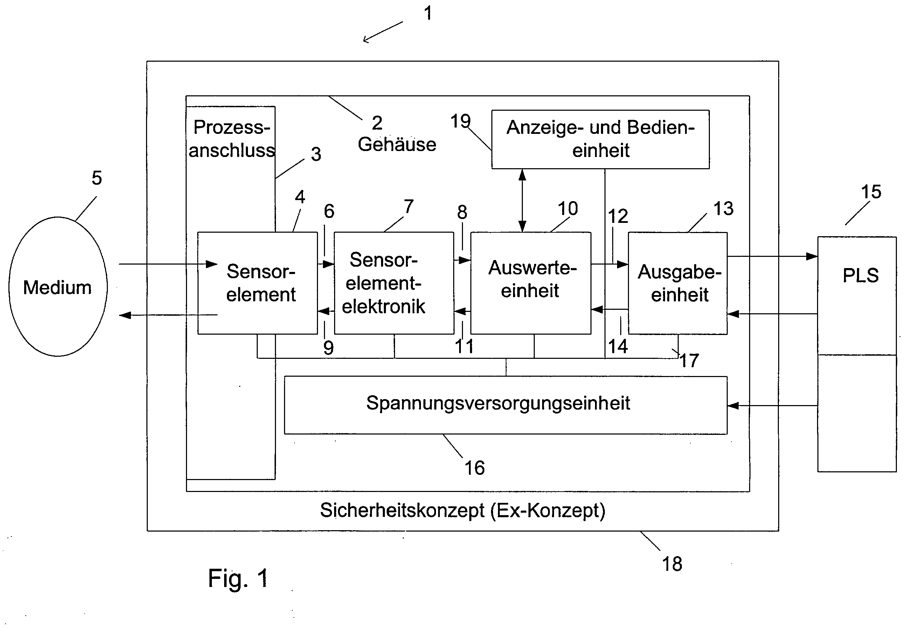

Fig. 1 zeigt schematisch den allgemeinen Aufbau einer modular aufgebauten Vorrichtung 1 zur Bestimmung einer physikalischen Prozessgröße, kurz Sensor genannt, gemäß der vorliegenden Erfindung. Das Gehäuse 2 enthält alle elektrischen Funktionseinheiten und schützt diese vor Umwelteinflüssen sowie vor chemischem oder mechanischem Angriff durch das Füllgut. Am Gehäuse 2 ist der Prozessanschluss 3 (Befestigungseinheit) angebracht oder ist in diesem integriert. Der Prozessanschluss 3 dient zur Adaption des Sensors an seine Messumgebung. Beim Anbau des Sensors 1 an einen Behälter besteht der Prozessanschluss 3 beispielsweise aus einem Flansch, der auf einen Gegenflansch des Behälters geschraubt wird. Eine andere Ausführungsform eines Prozessanschlusses 3 ist ein Einschraubgewinde, mit dem der Sensor 1 in ein Gegengewinde eines Behälters geschraubt und befestigt wird. Der Prozessanschluss 3 ist im wesentlichen ein mechanisches Bauteil und ist daher stets in engen Zusammenhang mit dem Gehäuse 2 zu betrachten. Wie bereits erwähnt kann der Prozessanschluss 3 Teil des Gehäuses 2 sein oder fest mit diesem verbunden sein.

Ein mechanisches oder elektromechanisches Sensorelement 4 ist in oder an dem Gehäuse 2 angebracht und steht in Wechselwirkung mit dem Medium dessen physikalische Prozessgröße ermittelt werden soll. Das Sensorelement 4 wandelt die zu ermittelnde Prozessgröße des Mediums 5 in eine elektrische Messgröße 6 um. Da das Sensorelement 4 in Abhängigkeit vom verwendeten Messverfahren in bestimmter Weise in Wechselwirkung mit dem Medium 5 treten soll, sei es durch direkte Berührung oder durch Aussenden und Empfangen von Signalen, ist es in einer Gehäuseöffnung angebracht oder außerhalb des Gehäuses 2 befestigt. Das Sensorelement 4 lässt sich auch mit dem Prozessanschluss 3 kombinieren, sodass es bei der Montage in den Behälter ragt oder an der Behälterwandung anliegt.

Das elektrische Signal 6 des Sensorelements 4 wird von der Sensorelektronikeinheit weiter verarbeitet. Die Sensorelektronikeinheit 7 ist ein sensorspezifisches Schaltungsteil und enthält Hard- und gegebenenfalls auch Software zur Umwandlung des primären elektrischen Signals 6 in einen standardisierten elektrischen Messwert 8. Wie bereits beschrieben, besitzt zu diesem Zweck die Sensorelektronikeinheit 7 beispielsweise einen Mikroprozessor mit entsprechender Peripherie (RAM, ROM, EEPROM, Analog-Digital-Wandler), Verstärker, Filter und weitere Peripherieeinheiten.

Der von der Sensorelektronikeinheit 7 standardisierte Messwert 8 wird anschließend von der Auswerteeinheit 10 in die gewünschte Information über die Prozessgröße gewandelt, die als elektrisches Signal 12 der Kommunikationseinheit 13 übergeben wird. Dazu sind in der Auswerteeinheit 10 im EEPROM sensorspezifische Kalibrier- und Abgleichswerte gespeichert, die der Auswerteeinheit 10 mittels der Kommunikationseinheit 13 mitgeteilt werden, mit Hilfe derer der Mikroprozessor die physikalische Prozessgröße bestimmt. Diese Auswertung erfolgt vorzugsweise mit Hilfe eines Programmablaufs auf der Basis einer Mikroprozessor-Hardware.

Die Kommunikationseinheit 13 dient der Ausgabe der gewünschten Informationen, die der Sensor ermittelt, und der Eingabe der genannten Kalibrier- und Abgleichswerte bzw. der Parametrierung des Sensors 1. Im einfachsten Fall weist die Kommunikationseinheit 13 eine Anzeige sowie Tasten zur Eingabe auf. Sie kann jedoch ebenso Schnittstellen zur Anbindung des Sensors 1 an ein übliches Feldbussystem aufweisen. Über dieses Feldbussystem ist der Sensor 1 beispielsweise mit der Prozessleitstelle 15 verbunden.

Die Spannungsversorgungseinheit 16 dient der Funktion, die elektrische Anschlussspannung des Sensors 1, die beispielsweise von einer externen Versorgungseinheit innerhalb des Prozessleitsystems 15 bereitgestellt wird, in eine geeignete stabilisierte Spannungen 17 zu transformieren (z. B. 3 Volt und 5 Volt), die zur Versorgung der elektrischen Funktionseinheiten des Sensors 1 notwendig sind.

Das gesamte Konzept des Sensors 1 unterliegt gewissen Sicherheitsrichtlinien, wie beispielsweise den Bestimmungen zur Vermeidung von Explosionen (Ex-Trennung). Dieses Sicherheitskonzept umfasst alle Funktionseinheiten und kann auf unterschiedlichen Arten umgesetzt werden. Je nach Art der Umsetzung ergeben sich bestimmte Anforderungen an verschiedene Funktionseinheiten des Sensors 1, z. B. Anforderungen an das Gehäuse 2 oder Beschränkung der von den elektrischen Schaltkreisen aufgenommenen Leistung.

Bei der Umsetzung des erfindungsgemäßen modularen Aufbaus einer Sensorplattform muss vor allem bei den elektrischen Bauteilen auf eine sinnvolle Aufteilung der einzelnen Funktionseinheiten in Hardwarekomponenten bzw. bestückten Leiterplatten geachtet werden. Zentrales Hardwareelement ist hierbei der Mikroprozessor, der Programmabläufe aus mehreren verschiedenen Funktionseinheiten, z. B. aus der Sensorelektronikeinheit 7, der Auswerteeinheit 10 und der Kommunikationseinheit 13, ausführen kann. Der Mikrocontroller greift somit auf verschiedene Funktionseinheiten zu. Hieraus ist ersichtlich, dass die in Fig. 1 vorgenommene Funktionsaufteilung nicht zwangsläufig mit der Aufteilung in Hardwarekomponenten, welche die Bausteine zum Zusammenbau eines Sensors 1 bilden, korreliert. Durch geeignete Zusammenfassung bestimmter Funktionseinheiten zu einer Hardwareeinheit ergeben sich die einzelnen zum Zusammenbau einer erfindungsgemäßen Sensorplattform benötigten Hardwarekomponenten. Bei dieser Zusammenfassung von Funktionseinheiten zu Hardwarekomponenten können bestimmte Funktionseinheiten auch auf unterschiedliche Hardwarekomponenten aufgespaltet werden.

Nach dieser Zuordnung der Funktionseinheiten zu Hardwarekomponenten ist der "Baukasten" zum Zusammenbau einer erfindungsgemäßen modular aufgebauten Sensorplattform festgelegt. Die Aufteilung der Funktionseinheiten in Hardwarekomponenten und deren Aufteilung in Softwarekomponenten ist jedoch prinzipiell voneinander unabhängig. Ergibt die Aufteilung der Hardwarekomponenten die einzelnen physikalischen Bauteile des Sensors, so spiegelt die Aufteilung in Softwarekomponenten einzelne Funktionseinheiten oder Teile davon wieder.

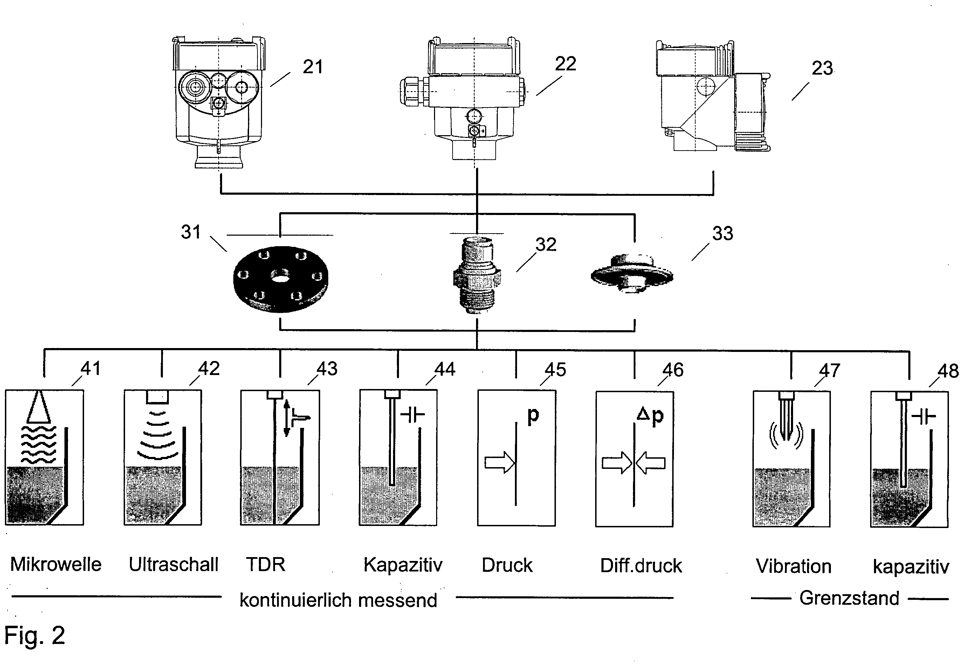

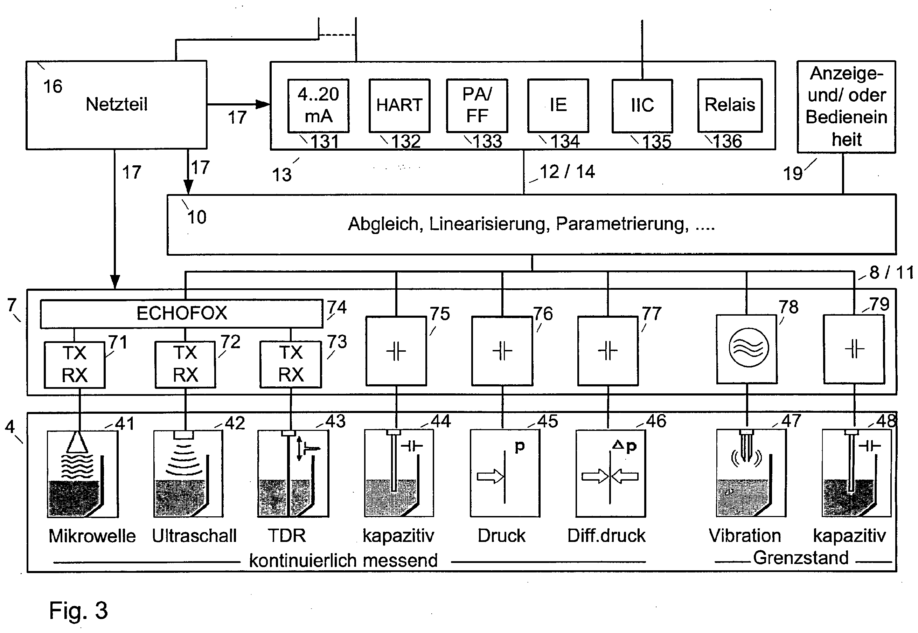

Zur Verdeutlichung der Umsetzung des modularen Aufbaus der erfindungsgemäßen Sensorplattform zeigen die Fig. 2 und 3 die einzelnen Funktionseinheiten. Die Fig. 2 zeigt dabei im Wesentlichen die mechanischen Komponenten des erfindungsgemäßen modularen Aufbaus einer Sensorplattform. Wie bereits beschrieben, werden Sensoren für die Füllstandsmessung in kontinuierlich messende Sensoren, die beispielsweise den prozentuellen Füllungsgrad eines Behälters angeben, und Grenzstandsensoren, die lediglich bei Über- oder Unterschreitung eines bestimmten Niveaus den Behälterzustand melden, unterteilt. Je nach Anwendung werden verschiedene physikalische Messverfahren verwendet. Daraus resultieren, die in Fig. 2 dargestellten Sensorelemente 41 bis 48:
- Sensorelement 41 zur frei strahlenden Mikrowellen-Füllstandsmessung (z. B. Antenne)
- Sensorelement 42 zur Ultraschall-Füllstandsmessung (z. B. elektroakustischer Schallwandler - Patch)
- Sensorelement 43 zur Füllstandsmessung mit geführten elektromagnetischen Wellen (z. B. Seilsonde)
- Sensorelement 44 zur kapazitiven Füllstandsmessung (z. B. Stabsonde)
- Sensorelement 45 zur Füllstandsmessung über hydrostatischen Druck (z. B. Membran mit Tauchkondensator)
- Sensorelement 46 zur Füllstandsmessung über Differenzdruck (z. B. Differenzdruckmesszelle)
- Sensorelement 47 zur Grenzstandmessung mit Vibrationselementen (z. B. Schwinggabel)
- Sensorelement 48 zur kapazitiven Grenzstandmessung (z. B. Stabsonde).

Die aufgeführten Sensorelemente 41 bis 46 eignen sich zur kontinuierlichen Messung von Füllständen, wohingegen die Sensorelemente 47 und 48 vornehmlich zur Grenzstandmessung eingesetzt werden.

Um den modularen Aufbau der Sensorplattform auch bezüglich der Sensorelemente 41 bis 48 zu gewährleisten, sind diese so ausgeführt, dass sie sich zusammen mit den unterschiedlichen Prozessanschlüssen 31 bis 33 an den unterschiedlichen Gehäusen 21 bis 23 befestigen lassen.

Der Prozessanschluss 31 besteht aus einem mit Bohrungen versehenen Flansch, an dem in bekannter Weise eines der Gehäuse 21 bis 23 und eines der Sensorelemente 41 bis 48 befestigt sind. Der Flansch dient zur Befestigung des Sensors 1 an einem geeigneten Gegenflansch einer Behälteröffnung. Alternativ dazu ist der Prozessanschluss 32 durch ein Einschraubgewinde gekennzeichnet, während der Prozessanschluss 33 eine spezielle Lösung für ein Teilgebiet der Füllstandsmessung zeigt; derartige Prozessanschlüsse 33 kommen beispielsweise in der Lebensmittelindustrie zum Einsatz, wo hohe Anforderungen hinsichtlich der Keimfreiheit durch derart dauerhaft dichte Prozessanschlüsse gewährleistet werden.

Das Gehäuse 21 ist ein äußerst kostengünstiges Kunststoffgehäuse, wohingegen die Gehäuse 22 und 23 aus Aluminium bestehen. Das Gehäuse 23 unterscheidet sich von dem Gehäuse 22 dadurch, dass es zwei getrennte Innenräume besitzt, von denen der eine Raum als Anschlussraum für die elektrischen Anschlussleitungen dient und eventuell eine Trennbarriere enthält, während der andere Raum die gesamte Elektronik des Sensors 1 enthält. Hintergrund für eine derartige Bauweise ist ein bestimmtes Explosionsschutzkonzept (Ex-Trennung).

Die in Fig. 2 dargestellten mechanischen Komponenten, die für den modularen Aufbau einer erfindungsgemäßen Sensorplattform benötigt werden, können erfindungsgemäß beliebig miteinander kombiniert und ausgetauscht werden. Um diesen modularen Aufbau zu gewährleisten, sind die mechanischen Komponenten an ihren Schnittstellen mechanisch untereinander so ausgeführt, dass jedes Gehäuse 21 bis 23 mit jedem Flansch 31 bis 33 und mit jedem Sensorelement 41 bis 48 kombiniert werden kann.

Im Gegensatz zu der Fig. 2 sind in der Fig. 3 hauptsächlich die elektrischen Funktionseinheiten, die untereinander nach bestimmten Regeln kombinierbar sind, dargestellt. Hierin sind analog zu der Fig. 2 die verschiedenen Sensorelemente 41 bis 48 dargestellt. Einem jeden Sensorelement 41 bis 48 ist eine entsprechende Sensorelektronikeinheit 71 bis 79 zugeordnet. Die das Laufzeitverfahren nutzenden eng verwandten Sensorelemente 41 bis 43 benötigen jeweils eine durch eine Echoverarbeitungseinheit 74 ergänzte Sende- und Empfangsschaltung 71 bis 73, die aufgrund der Verwandtschaft der zu empfangenden Signale sehr ähnlich ausgebildet sind. Durch die enge Verwandtschaft der empfangenen Echosignale kann in diesem Fall die Echoverarbeitungseinheit 74 identisch ausgebildet sein; derartige Echoverarbeitungseinheiten 74 wurden beispielsweise von der Firma VEGA Grieshaber KG entwickelt und werden unter dem Markennamen ECHOFOX® vertrieben. Die Schaltungs- und Signalverarbeitungskonzepte dieser Laufzeit-. Füllstandssensoren sind dem Fachmann hinreichend bekannt, weshalb hier auf eine weitere Ausführung verzichtet und auf die Literatur "radar level measurement", Peter Divine, 2000, ISBN 0-9538920-0-X verwiesen wird. Ergebnis der Signalverarbeitung 47 ist beispielsweise ein Messwert für die Entfernung zwischen Sensor 1 und Füllgutoberfläche.

Das kapazitive Sensorelement 44 zur kontinuierlichen Füllstandsmessung sowie das Sensorelement 48 zur Grenzstandsmessung sind eng verwandt, weshalb beide mit identischen oder zumindest teilweise identischen Sensorelektronikeinheiten 75 und 79 kombiniert werden können. Dadurch ist eine weitere Standardisierung und Reduzierung der vorzusehenden Hardwarekomponenten für eine Sensorplattform möglich.

Das gleiche gilt prinzipiell für die Sensorelemente 45 und 46 zur Druck- bzw. Differenzdruckmessung mit ihren zugehörigen Sensorelektronikeinheiten 76 und 77, die beispielsweise ebenfalls eine Kapazität, z. B. die eines Tauchkondensators, ermitteln. Somit können die Sensorelektronikeinheiten 75, 76, 77 und 79 identisch oder zumindest teilweise identisch ausgeführt werden.

Für die Vibrationsgrenzstandsmessung wird das Sensorelement 47 (z. B. Schwinggabel) von einer Sensorelektronikeinheit 78 zu Schwingungen angeregt und bezüglich der Amplitude, Frequenz und/oder Phasenlage der ausgeführten Schwingungen ausgewertet.

Erfindungsgemäß liefern damit alle Sensorelektronikeinheiten 74 bis 79 einen standardisierten elektrischen Messwert 8, der in vorbekannter Weise mit dem zu ermittelnden Behälterfüllstand korreliert. Wie bereits beschrieben, besitzen zum Zwecke dieser Signalstandardisierung die Sensorelektronikeinheiten 71 - 79 beispielsweise einen Mikroprozessor mit entsprechender Peripherie (RAM, ROM, EEPROM, Analog-Digital-Wandler), Verstärker, Filter und weitere Peripherieeinheiten.

Da der elektrische Messwert 8 erfindungsgemäß für alle Sensorelektronikeinheiten 74 bis 79 standardisiert ist, kann dieser Messwert 8 von einer für alle Sensorelektronikeinheiten 74 bis 79 identischen Auswerteeinheit 10 in einen Ausgabewert 12 verwandelt werden, der genau der gesuchten Füllstandinformation entspricht. Diese Information lautet beispielsweise bei den Grenzstandsensoren "Grenzstand ist erreicht", bei den kontinuierlich messenden Sensoren ist diese Information beispielsweise der Befüllungsgrad des Behälters in Form eines prozentualen Wertes.

Zur Umwandlung des Messwerts 8 in den Ausgabewert 12 greift die Auswerteeinheit 10 auf gespeicherte sensorspezifische Informationen über den Zusammenhang zwischen Messwert 8 und interessierender physikalischer Größe zurück. Diese gespeicherten Informationen sind beispielsweise Kalibrier- und Abgleichwerte, die während eines Kalibriervorgangs zum Ende der Sensorherstellung und eines Abgleichvorgangs bei der Sensor-Inbetriebnahme an seinem Einsatzort ermittelt werden. Für einen Mikrowellen-Füllstandsensor beispielsweise sind die Kalibrierwerte der Entfernungs-Nullpunkt und die Zuordnung Messwert 8 zur Sensorentfernung, d.h. ein Steigungswert. Die Abgleichwerte enthalten die Information bezüglich des Behälters und der Einbauposition des Sensors 1, welche die Zuordnung der Entfernungswerte Sensor - Füllgut zum Befüllungsgrad des Behälters erlauben. Ist dieser Zusammenhang aufgrund der Behältergeometrie nicht linear, so ist hier zusätzlich eine behälterspezifische Linearisierung erforderlich.

Die benötigten Kalibrier- und Abgleichwerte werden dem Sensor 1 von außen über die Kommunikationseinheit 13 zugeführt und gelangen über den Informationskanal 14 zur Auswerteeinheit 10. Außerdem gelangen auf diesem Weg bei Bedarf auch weitere Informationen zur Parametrierung des Sensors 1 in die Auswerteeinheit 10, damit diese optimal an seine Aufgaben angepasst werden kann. Umgekehrt kann die Auswerteeinheit 10 bei Bedarf nicht nur die Information über den erforderlichen Ausgabewert 12, sondern auch zusätzlich vorliegende Informationen, wie beispielsweise Selbstdiagnosewerte des Sensors 1, bereitstellen.

Derart hoch entwickelte Sensoren benötigen gegebenenfalls auch einen Parameteraustausch zwischen Auswerteeinheit 10 und Sensorelektronikeinheit 7 über den Informationsweg 8 bzw. 11.

Die Kommunikationseinheit 13 enthält verschiedene Komponenten 131 bis 136, die, wie schon erwähnt, den Informationsaustausch des Sensors 1 mit der Außenwelt, beispielsweise einer Prozessleitstelle 15, ermöglichen. Die Einbindung des Sensors 1 in das Prozessleitsystem 15 erfolgt beispielsweise über gängige Feldbussysteme wie einen Profibus PA, Fieldbus Foundation, Industrial Ethernet oder HART. Die entsprechenden Komponenten 132, 133 und 134 hierfür sind hierfür hard- und softwaremäßig in der Kommunikationseinheit 13 implementiert.

Eine weitere übliche Anbindung an ein Prozessleitsystem 15 ist der analoge 4-20 mA Stromausgang 131. Bei sogenannten "loop powered" Sensoren ist zur Reduzierung des Leitungsaufwands die gleichzeitige Ausnutzung eines Leitungspaares zur Versorgung mit elektrischer Energie und zur Übertragung der Informationen üblich.

Bei Bedarf kann der Sensor 1 neben der Einbindung ins Prozessleitsystem 15 eine zusätzliche Schnittstelle, beispielsweise in Form einer seriellen IIC-Bus-Schnittstelle 135, besitzen, über die mit dem Sensor 1 vor Ort über einen angeschlossenen Computer kommuniziert werden kann. Eine optionale Anzeige- und Bedieneinheit 136, die im Sensor 1 oder auch getrennt von diesem platziert werden kann, kommuniziert ebenfalls über die IIC-Bus-Schnittstelle 135.

Das Netzteil 16 wird von außen entweder über separate Leitungen oder die gemeinsam zur Informationsübertragung genutzte Leitung mit elektrischer Energie versorgt und stellt die geregelte Spannungen 17, vorzugeweise 3V und 5V, für die einzelnen Hardwarekomponenten zur Verfügung.

Bisher wurden die rein funktionalen Einheiten der Sensorplattform beschrieben. Bei der praktischen Umsetzung führt das hier vorgestellte funktionelle Plattform-Konzept für Füllstandsensoren zu folgenden Hardwarekomponenten:
Ein standardisiertes Netzteil mit einer Kombination aus Spannungsversorgungseinheit und Kommunikationseinheit in alternativen Ausführungen, ein standardisiertes Digitalteil mit Sensorelektronikeinheit und Mikroprozessor einschließlich zugehöriger Peripherie zur Ausführung einzelner Funktionen, eine optionale Standard-Anzeige- und Bedieneinheit sowie teils standardisierte, teils individuelle Hardwarekomponenten mit Sensorelektronikeinheit. Die Komponenten bilden die elektronischen Hardware-Grundlage der "Sensor-Plattform". Der Mikroprozessor lässt sich flexibel mit sowohl standardisierten als auch individuellen Softwaremodulen ausrüsten. Beispiele hierfür sind ein Softwaremodul zur Kommunikation, eines zur Messwert-Auswertung und eines angepasst zur Sensorsignalverarbeitung.

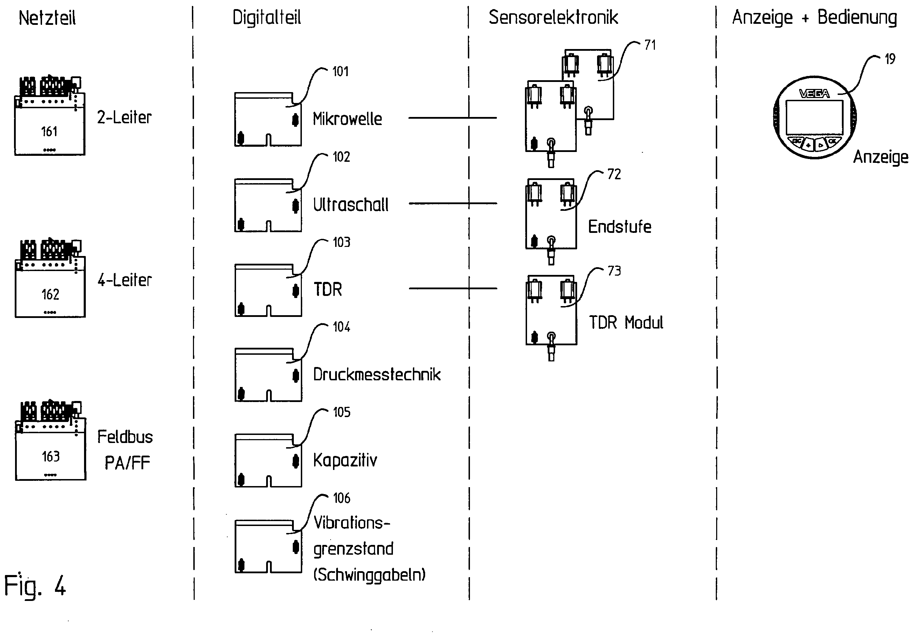

Die Fig. 4 zeigt den "Baukasten" für die elektronischen Hardwarekomponenten, die für den modularen Aufbau der Sensor-Plattform erforderlich sind. Die gesamte Elektronik besteht dabei aus minimal zwei (Netz- und Digitalteil), maximal jedoch aus vier bestückten Leiterplatten, die erfindungsgemäß derart gestaltet sind, dass sie nach bestimmten Gesichtspunkten sinnvoll miteinander kombinierbar sind. Hierfür weisen die Komponenten, die gleiche Funktionen übernehmen, jeweils gleiche mechanische Abmessungen auf.

Als Netzteil stehen drei verschiedene Ausführungsformen 161 - 163 mit einheitlichen mechanischen Abmessungen zur Verfügung: Ein Zweileiter-Netzteil 161 zur Anbindung an eine 4 - 20 mA-Zweileiter-Prozessregelschleife, eventuell mit zusätzlicher HART-Kommunikation, ein Vierleiter-Netzteil 162 mit einem Leiterpaar zur Versorgung und einem Leiterpaar zur Messwertausgabe und ein Feldbus-Netzteil 163 zur Anbindung an einen Profibus PA oder Fieldbus Foundation, Industrial Ethernet oder HART. Die verschiedenen Digitalteile 101 - 106 unterscheiden sich jeweils bezüglich der verwendeten Messverfahren. Während die aufwendigeren Messverfahren 101 - 103 (Mikrowelle, Ultraschall oder TDR) jeweils eine Platine mit zusätzlicher Sensorelektronikeinheit 71 - 73 benötigen, ist bei den einfacheren Messverfahren mittels Druck, Kapazität oder Vibration die Sensorelektronikeinheit auf der gleichen Digitalplatine 104 - 106 wie die Mikroprozessor-Funktionseinheit angeordnet.

Optional wird eine extra gehauste Anzeige- und Bedieneinheit 136 jeweils zur Elektronikbaugruppe des Sensors 1 hinzugefügt und komplettiert diese.

Der erfindungsgemäße modulare Aufbau einer Sensorplattform basierend auf dem soeben beschriebenen "Baukasten" wird im folgenden anhand zweier konkreter modular aufgebauter Sensoren detailliert erläutert.

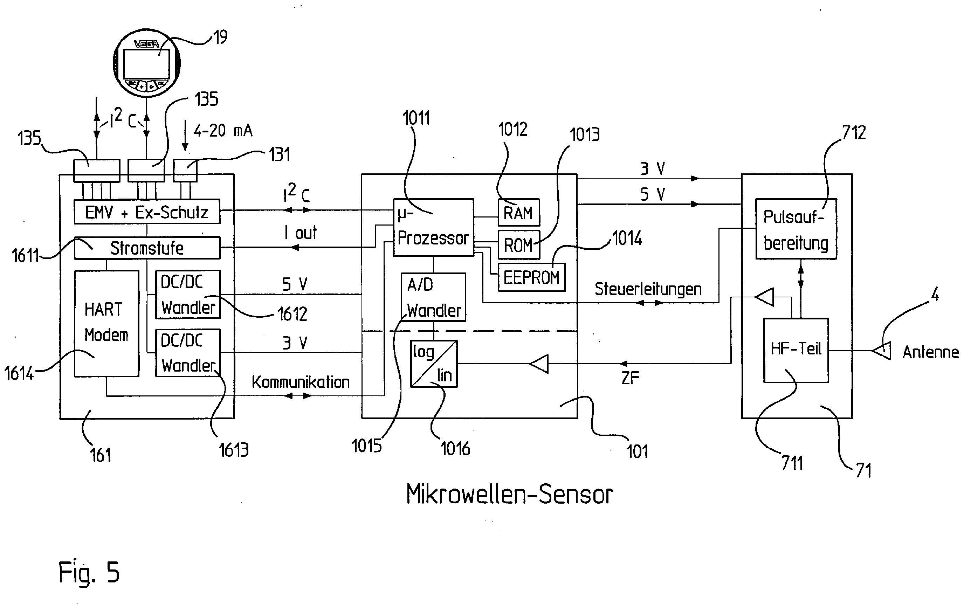

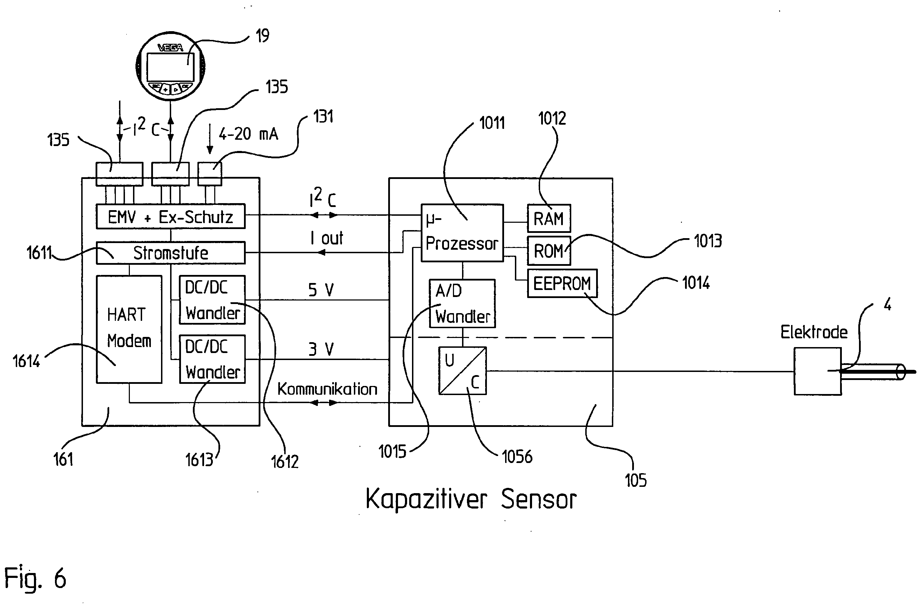

In den Fig. 5 und 6 sind die Funktionsblöcke der einzelnen Platinen und deren Verbindungen untereinander für einen Zweileiter-Mikrowellen-Sensor (Fig. 5) und einen kapazitiven Zweileiter-Sensor (Fig. 6) dargestellt.

Das für beide Sensoren identische Zweileiter-Netzteil 161 bietet Anschlussmöglichkeiten für die 4-20 mA Zweileiter-Stromschleife 131, über die bekanntlich der Sensor nicht nur den Messwert ausgibt, sondern auch mit Energie versorgt wird. Das Netzteil 161 weist zwei IIC-Bus-Schnittstellen 135 auf, die zum Anschluss einer optionalen internen und / oder externen Anzeige-Bedieneinheit 136 oder eines Computers dienen.

Alle Ein- und Ausgänge des Netzteils sind durch entsprechende Maßnahmen im Hinblick auf elektromagnetische Verträglichkeit (EMV) und Explosionsschutz geschützt. Das Netzteil 161 enthält eine Stromstufe 1611, die von der Digitalplatine Information über den Messwert erhält und den auf der Zweileiterschleife fließenden Strom entsprechend zwischen 4 und 20 mA regelt.

Die an der 4 - 20 mA Zweileiter-Stromschleife anstehende Eingangsspannung wird über zwei DC/DC-Wandler 1612, 1613 in stabilisierte Spannungen von 3V und 5V gewandelt und dem Digitalteil bereit gestellt. Über das HART-Modem 1614 werden digitale Informationen auf den Zweileiterstrom aufmoduliert bzw. von dort ankommende Informationen demoduliert. Über die Kommunikationsleitungen werden diese Informationen zwischen dem HART-Modem und dem Mikroprozessor ausgetauscht.

Das Digitalteil 101 bzw. 105 enthält für beide Sensoren einen identischen Mikroprozessor 1011 einschließlich Peripherie (RAM 1012, ROM 1013, EEPROM 1014, A/D-Wandler 1015) und einen sich durch die Sensorelektronikeinheit unterschiedlichen Teil. Der Unterschied besteht darin, dass für den Zweileiter-Mikrowellen-Sensor eine zusätzliche Platine 71 mit Sensorelektronikeinheit notwendig ist. Das dort enthaltene HF-Modul 711 erzeugt ein Sendesignal, das über das Sensorelement 4 in Richtung Füllgutoberfläche abgestrahlt wird. Die von dort reflektierte Welle wird wieder von dem Sensorelement 4 empfangen und im Empfänger des HF-Moduls 711 beispielsweise in eine andere Frequenz- oder Zeitebene transformiert. Die Takte für den Sende- und Empfangsteil werden von der Pulsaufbereitung 712 in der Sensorelektronikeinheit 71 generiert, die wiederum über Steuerleitungen mit dem Mikroprozessor 1011 in Verbindung steht. Über diese Steuerleitungen sind die Parameter des HF-Moduls 711 wie z.B. Aktivierung / Deaktivierung der Sensorelektronikeinheit 71 oder Differenz zwischen Sende- und Empfangstakt einstellbar.

Die aus dem Empfangsteil kommende sogenannte Zwischenfrequenz (ZF) wird, nach Verstärkung, über einen Logarithmierer 1016, der die Zwischenfrequenz zusätzlich noch demoduliert, als logarithmische Hüllkurve, die die Intensität der Reflexionen über der Zeit darstellt, dem A/D-Wandler 1015 zugeführt. Nach der Analog-Digital-Wandlung der diskreten Hüllkurvenwerte werden diese vom Mikroprozessor 1011 im RAM zwischengespeichert und hinsichtlich des Ortes der Reflexion von der Füllgutoberfläche ausgewertet. Mit Hilfe der im EEPROM gespeicherten Abgleich- und Kalibrierwerte kann der Mikroprozessor 1011 der ermittelten Entfernung zur Füllgutoberfläche einen Grad der Behälterbefüllung zuweisen. Daraus ergibt sich schließlich der Wert des einzustellenden Schleifenstroms, der wie bereits erwähnt an die Stromstufe 1611 des Netzteils 161 übermittelt wird.

In der Fig. 6 ist der kapazitive Zweileiter-Sensor dargestellt, der exakt das gleiche Netzteil 161 wie der in der Fig. 5 beschriebene Zweileiter-Mikrowellen-Sensor enthält. Ebenso ist der Mikroprozessor 1011 einschließlich der zugehörigen Peripherie (1012 - 1015) gleich, wodurch natürlich auch die Schnittstelle zwischen Netzteil 161 und Digitalteil 101 identisch ist.

Der sensorspezifische Schaltungsteil findet bei diesem kapazitiven Sensor komplett auf dem Digitalteil 105 Platz, so dass hier auf eine zusätzliche Platine mit Sensorelektronikeinheit verzichtet werden kann. Die Kapazität des Sensorelements 4 (Elektrode) wird über den Kapazitäts-Spannungswandler 1056 in ein Spannungssignal umgewandelt, das über den A/D-Wandler 1015 dem Mikroprozessor 1011 zugänglich wird. Analog zum Mikrowellensensor wird der die aktuelle Kapazität repräsentierende Spannungswert mit den im EEPROM 1014 gespeicherten Kalibrier- und Abgleichwerten verglichen und daraus der Befüllungsgrad des Behälters abgeleitet.

Die Funktionsweise der Sensorelektronikeinheit (Kapazitäts-Spannungswandlung) ist aus dem Stand der Technik bekannt und wird hier nicht weiter erläutert.

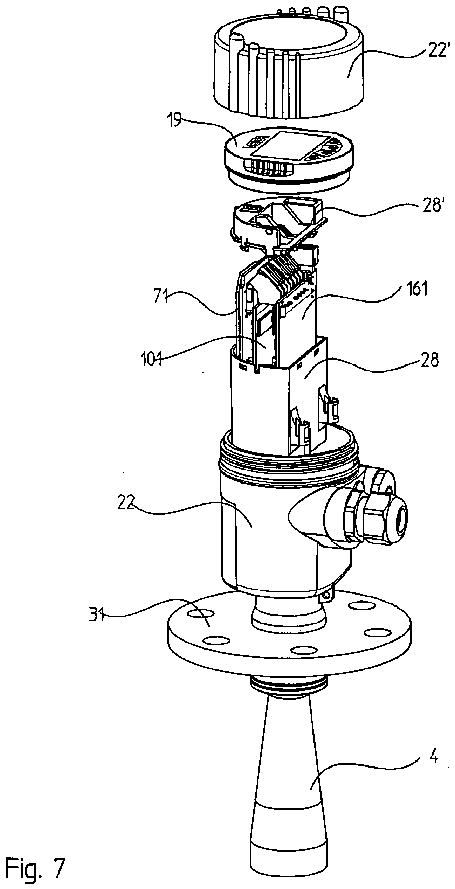

Fig. 7 zeigt den Zusammenbau des Mikrowellensensors gemäß Fig. 5 mit den wesentlichen Komponenten. Sensorspezifische Komponenten sind hier nur das Sensorelement 4 (Hornantenne) und die Platine mit der Sensorelektronikeinheit 71. Der Prozessanschluss 31, das Gehäuse 22 mit Deckel 22', das Innengehäuse 8 mit Deckel 8', die Digitalplatine 101, die Spannungsversorgungseinheit oder Netzteil 161 und das Anzeige- und Bedienmodul 136 sind universell für die betreffende Plattform einsetzbar, so dass für den entsprechenden kapazitiven Zweileitersensor gemäß der Fig. 6 die exakt identischen Komponenten verwendet werden können.

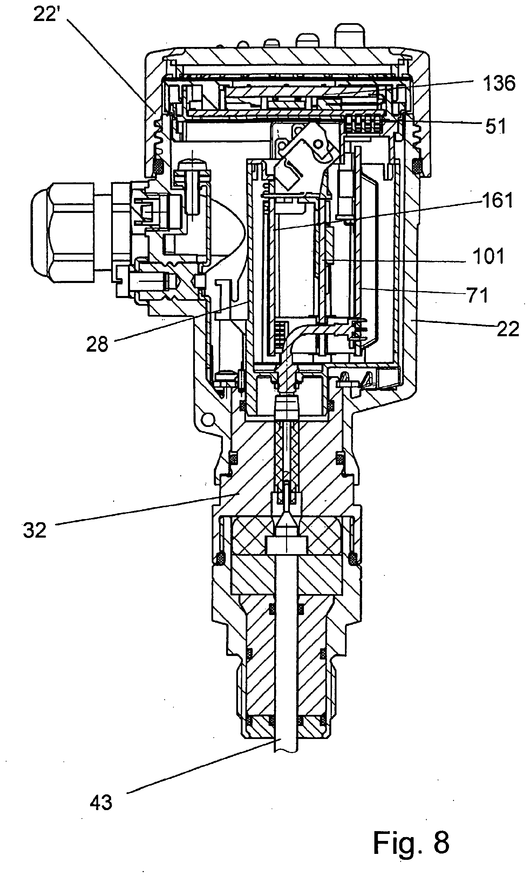

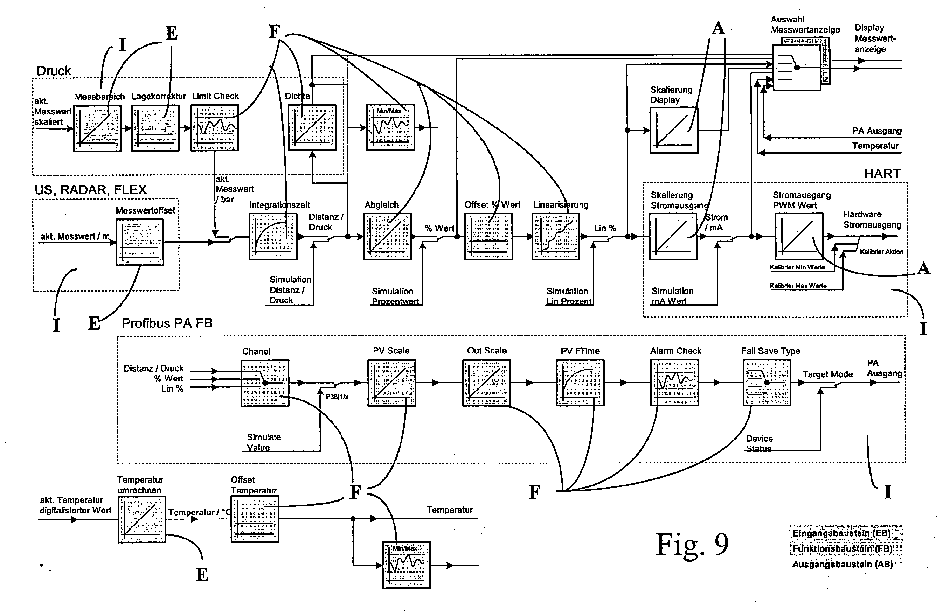

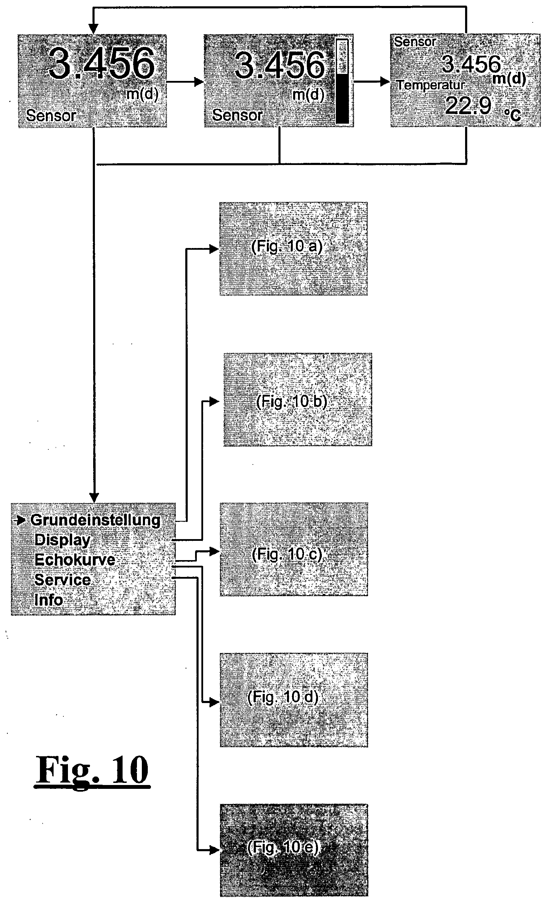

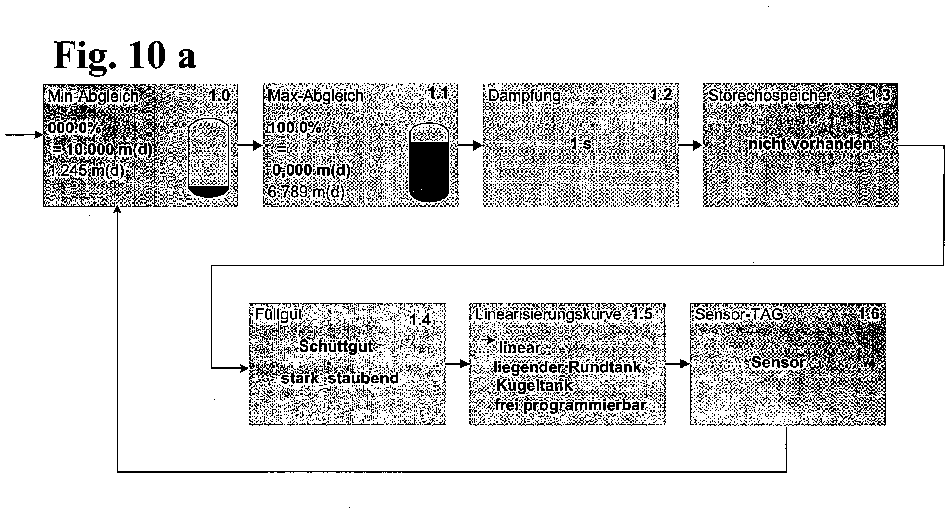

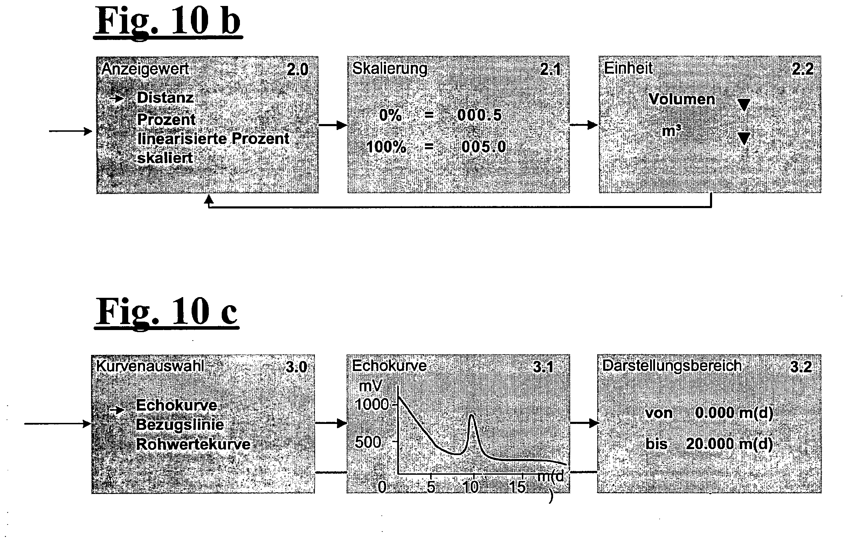

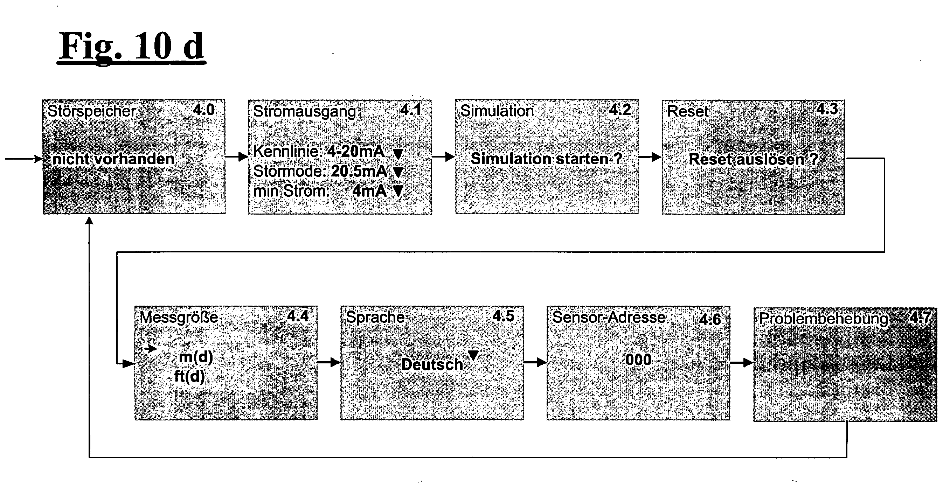

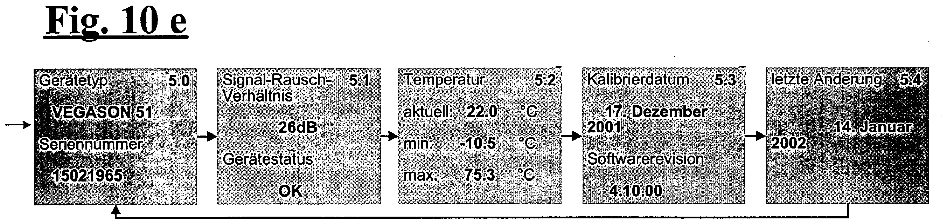

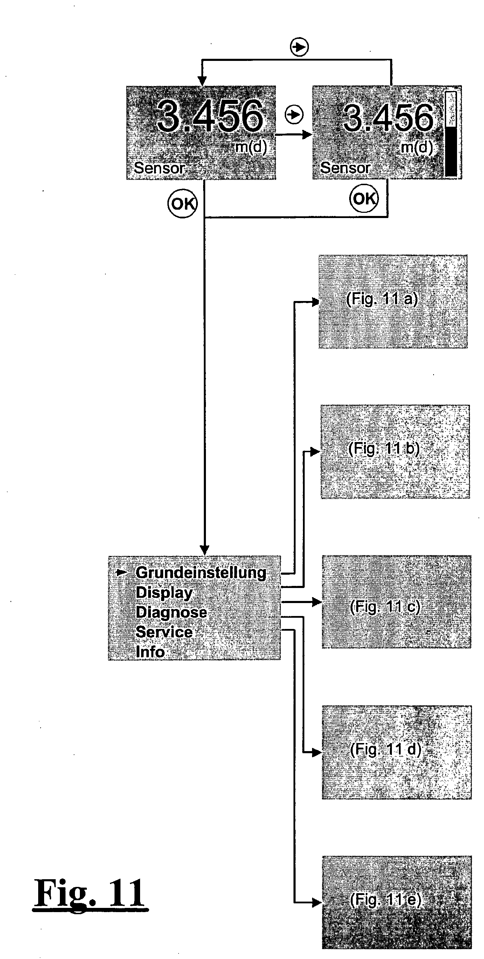

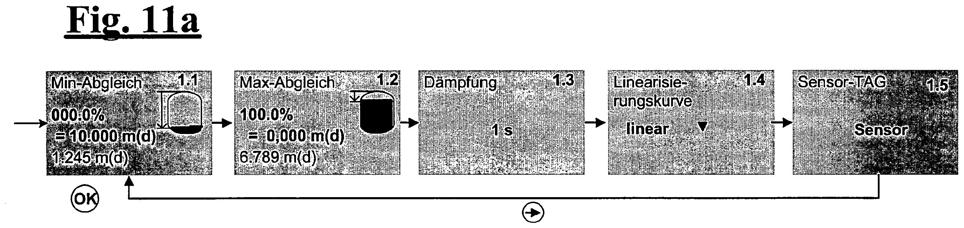

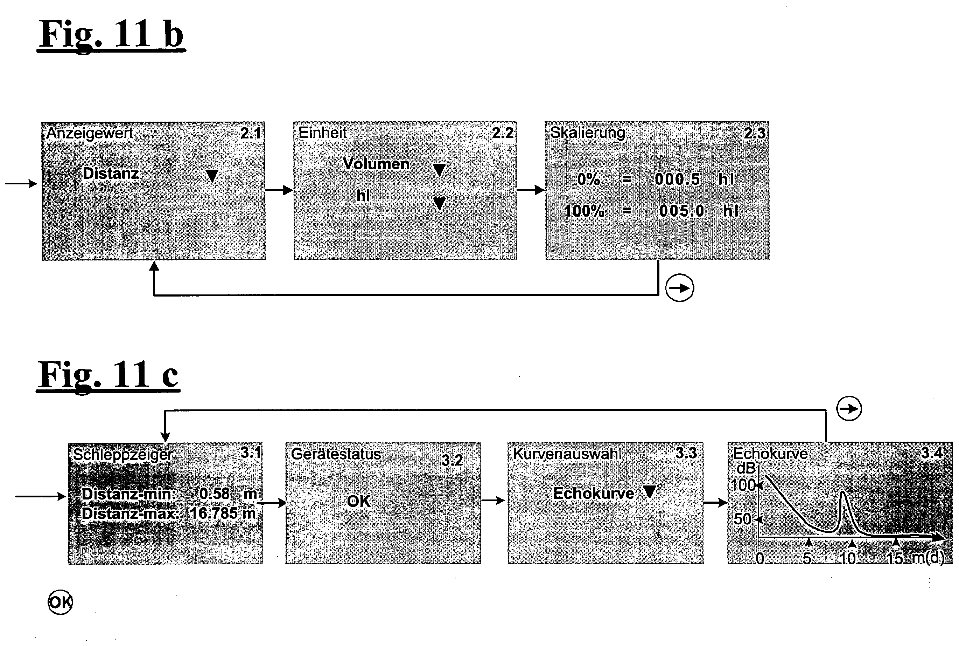

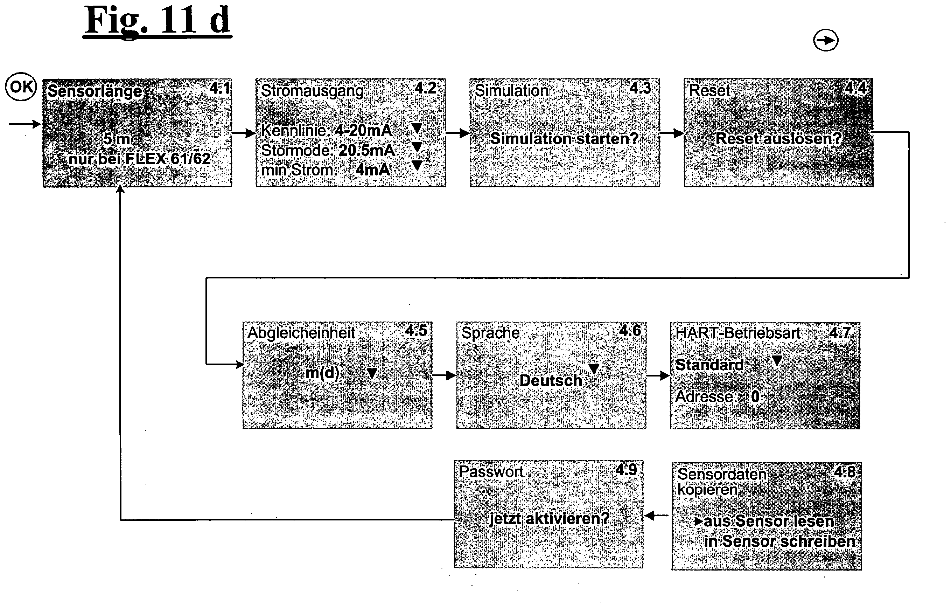

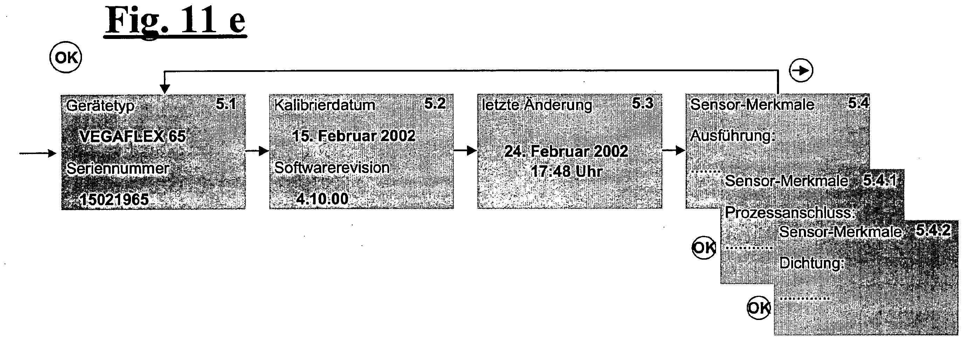

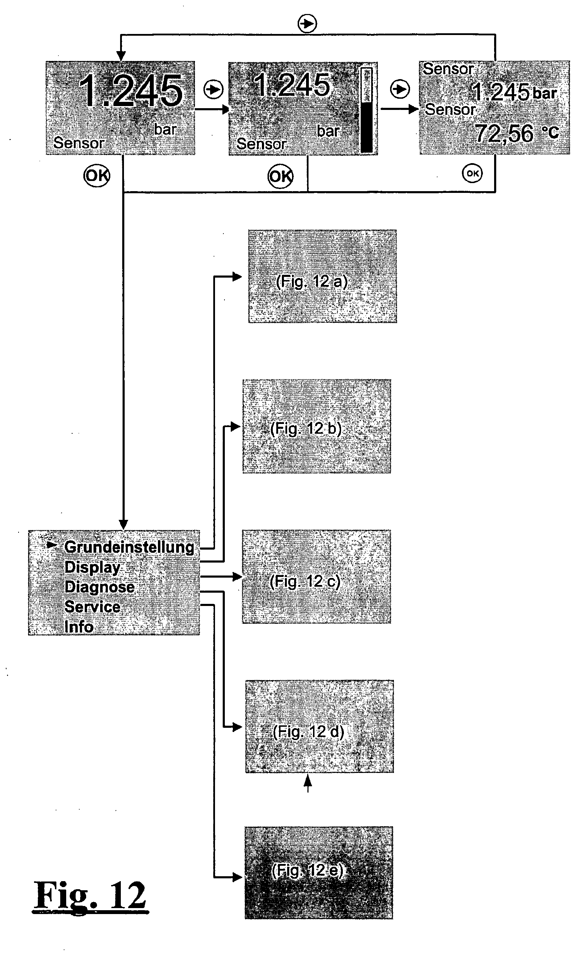

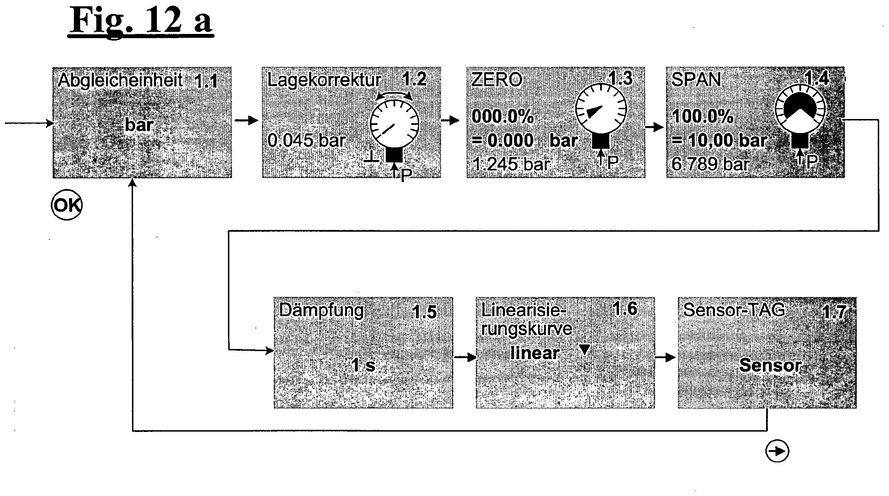

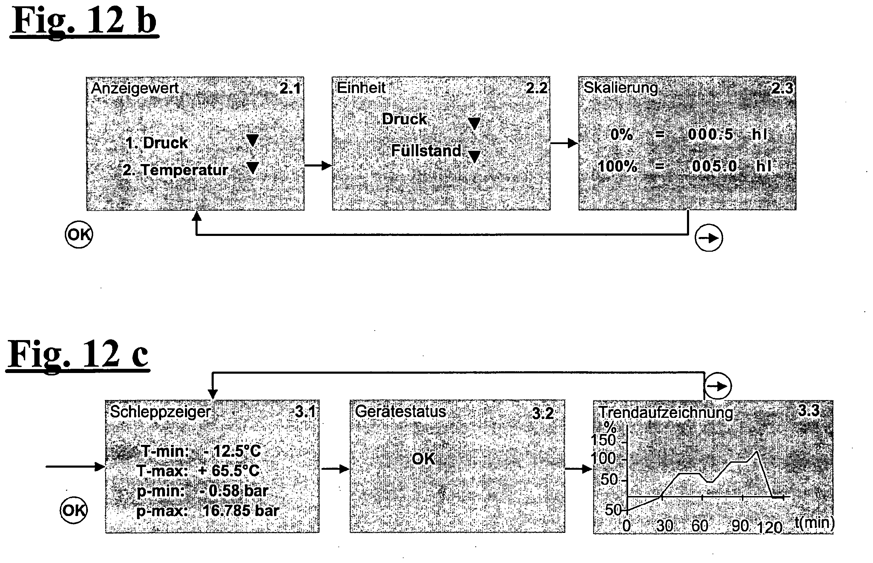

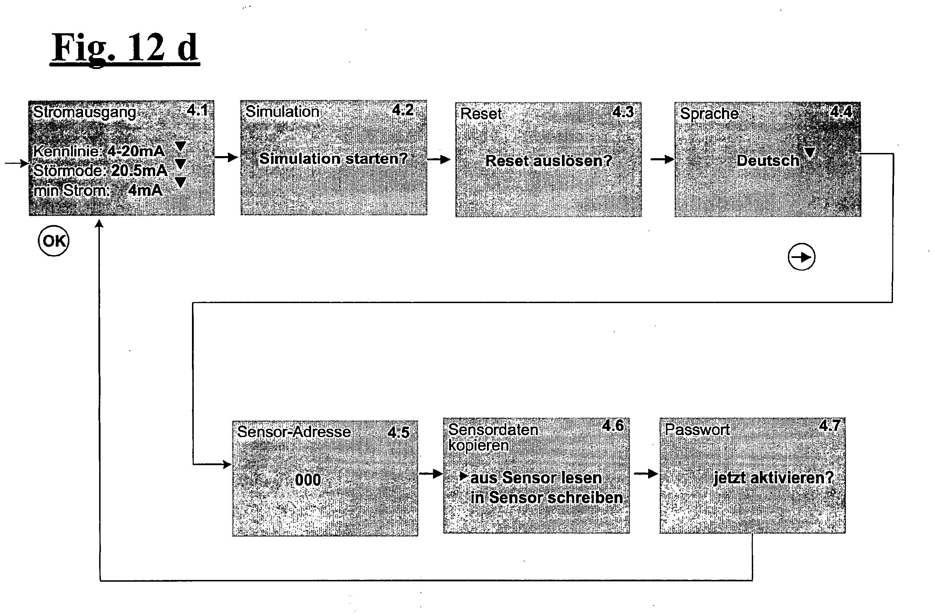

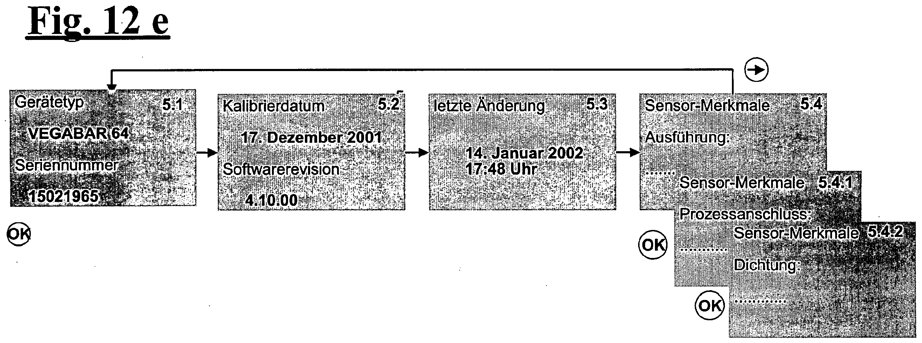

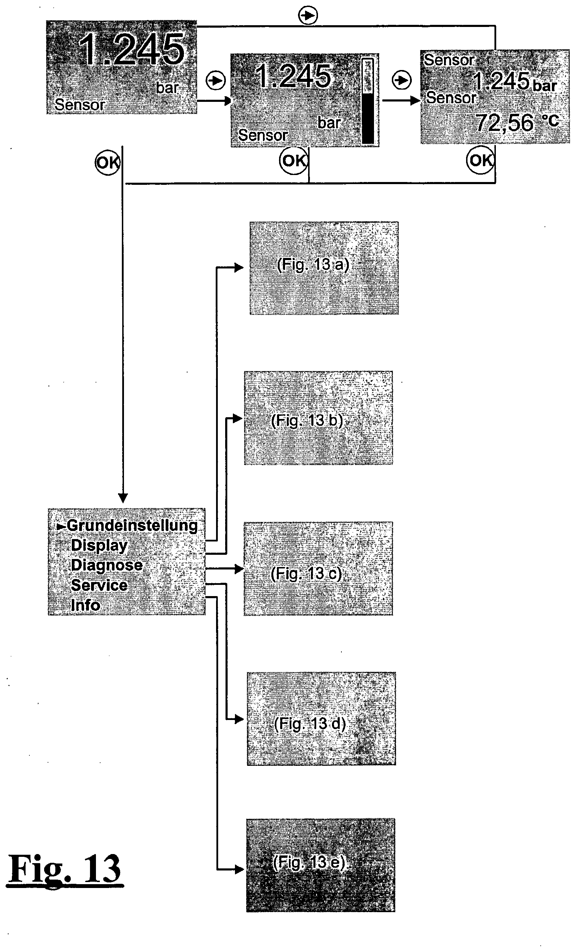

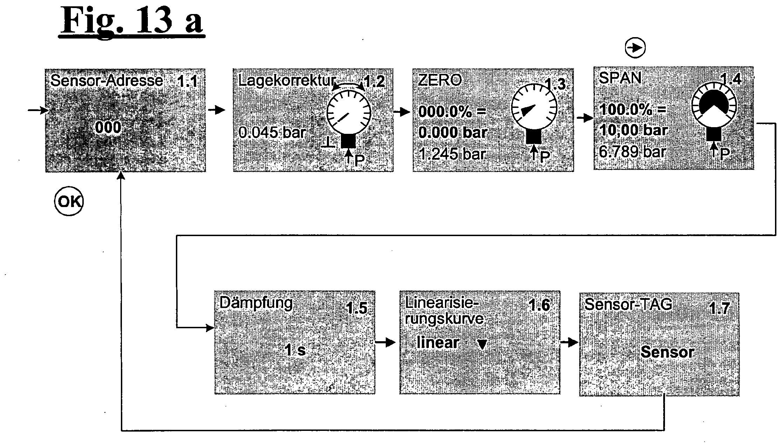

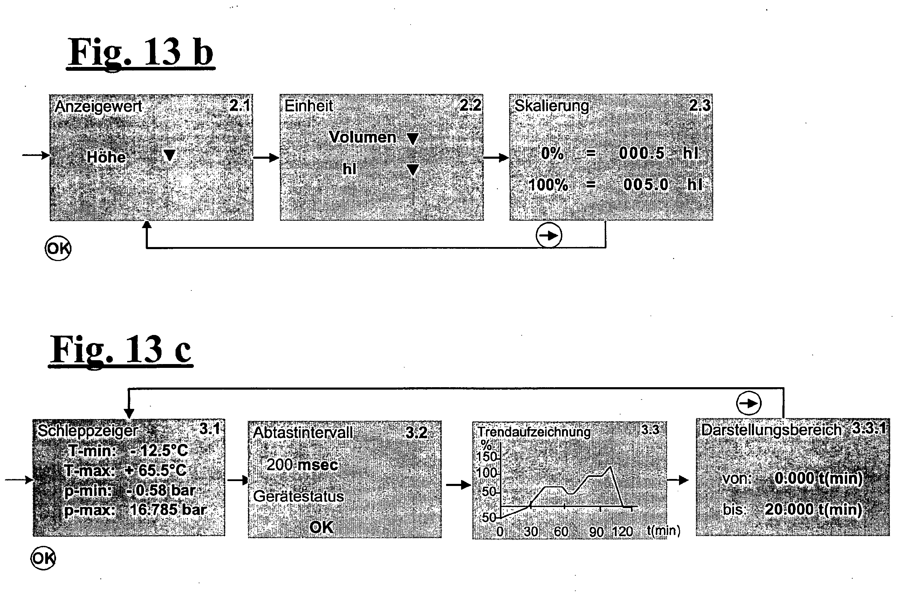

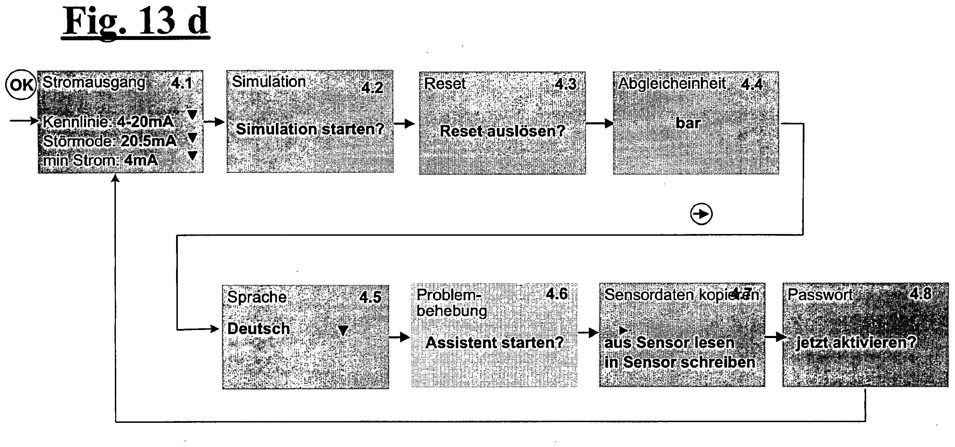

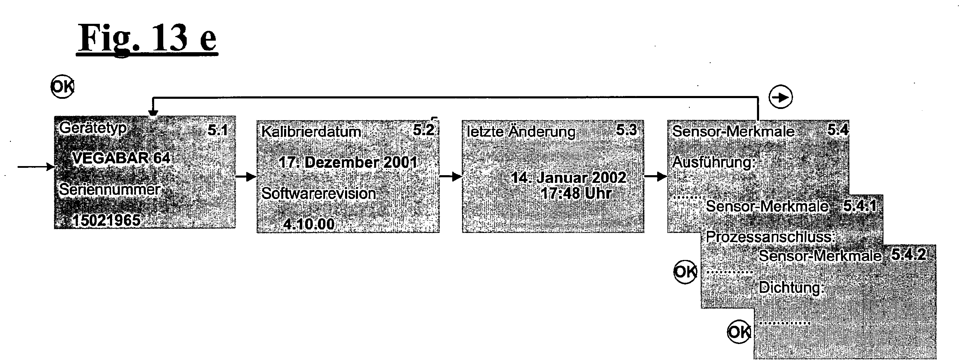

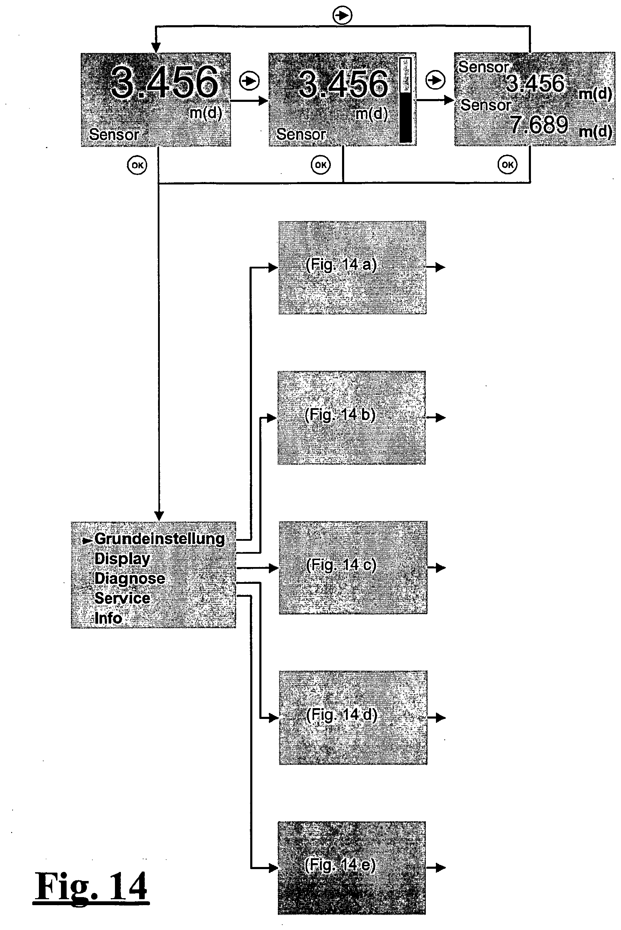

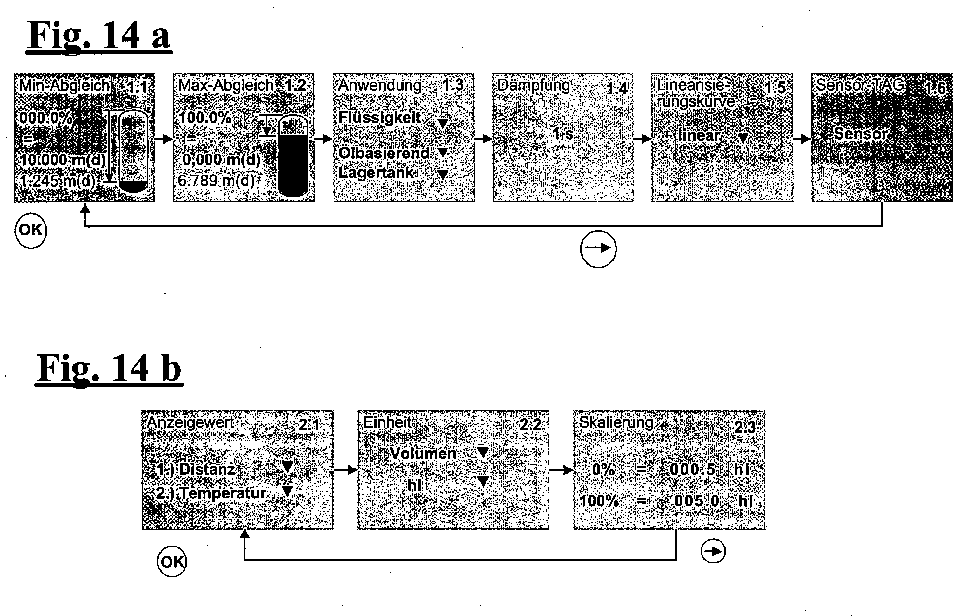

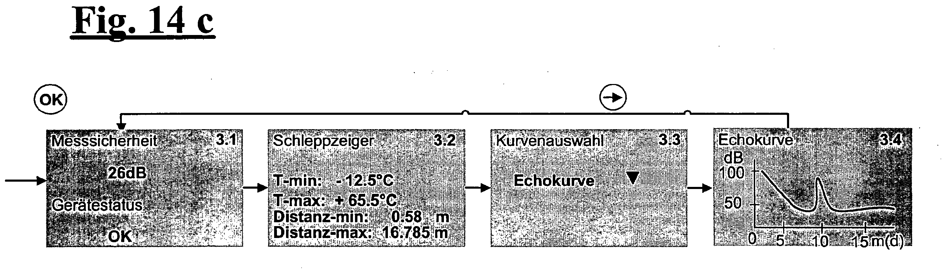

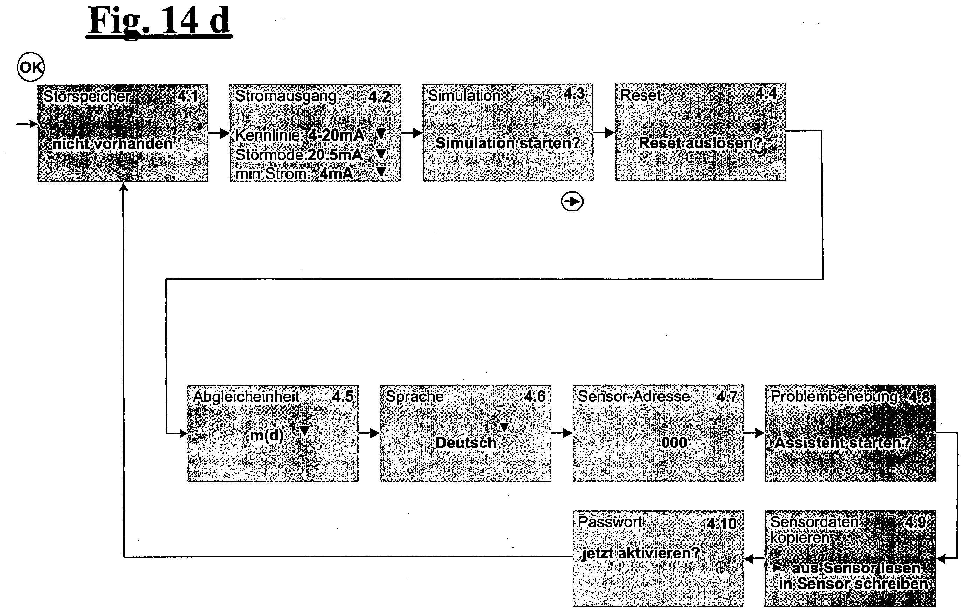

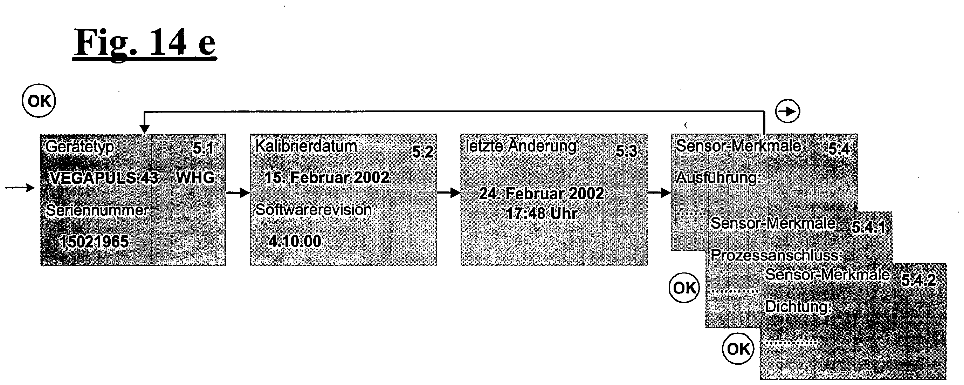

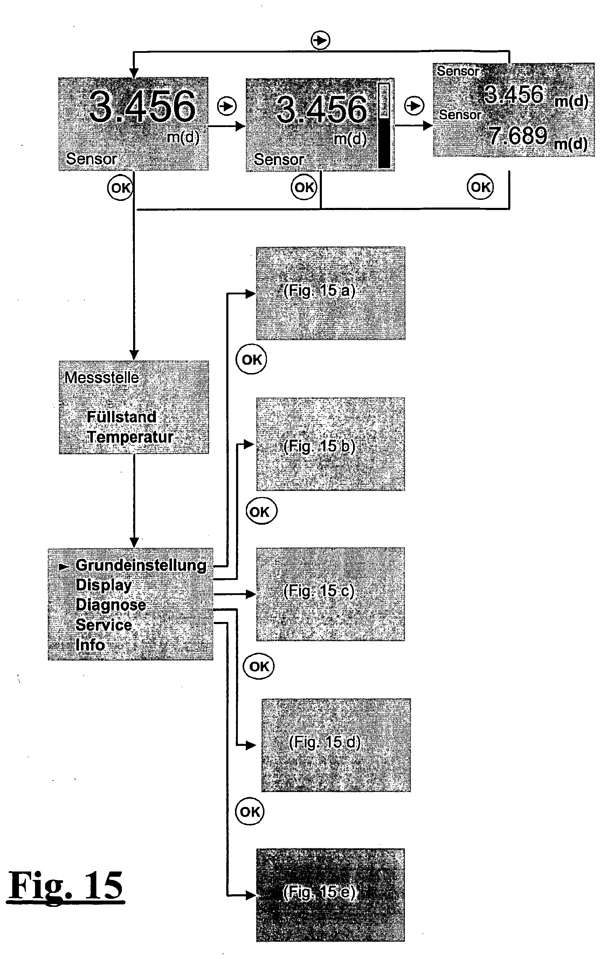

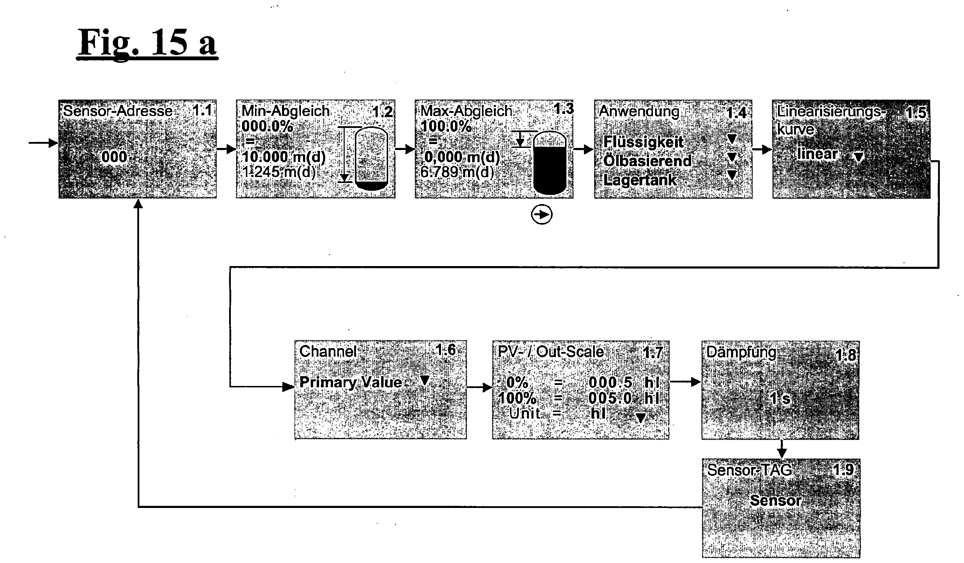

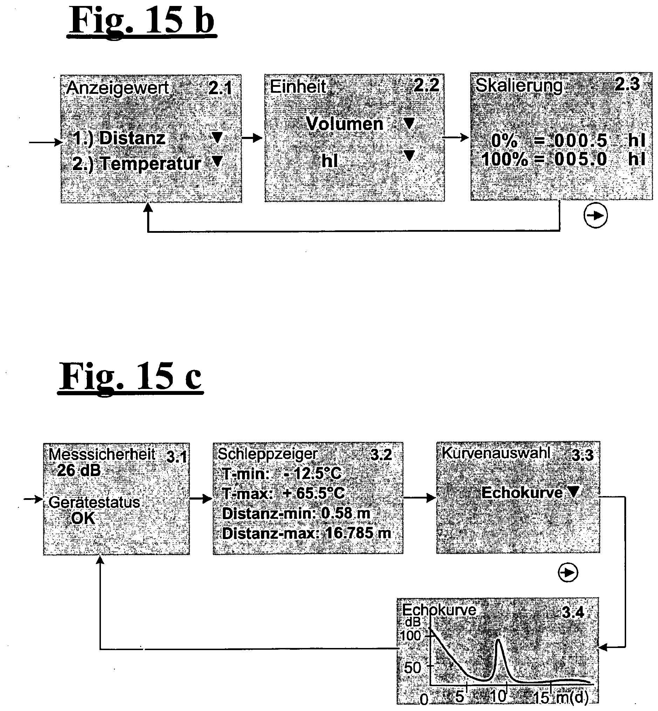

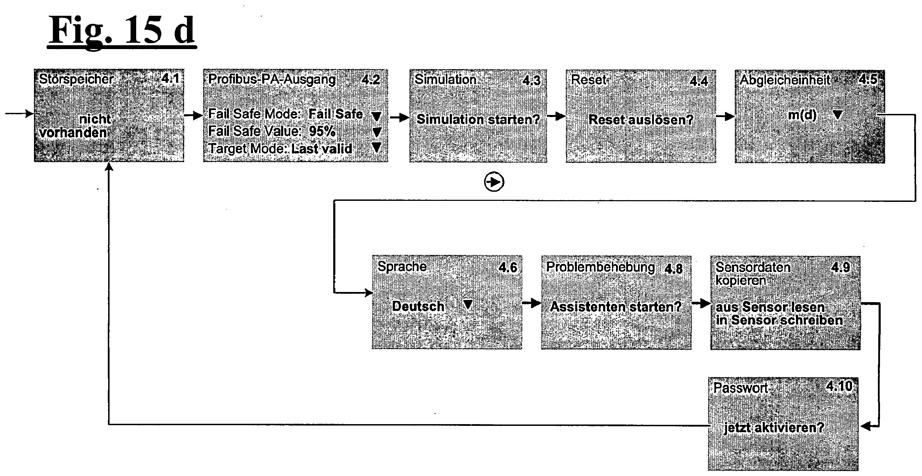

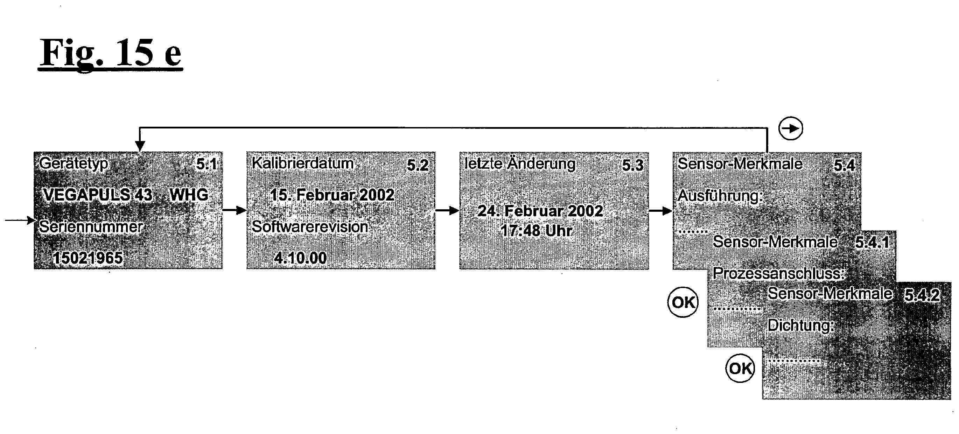

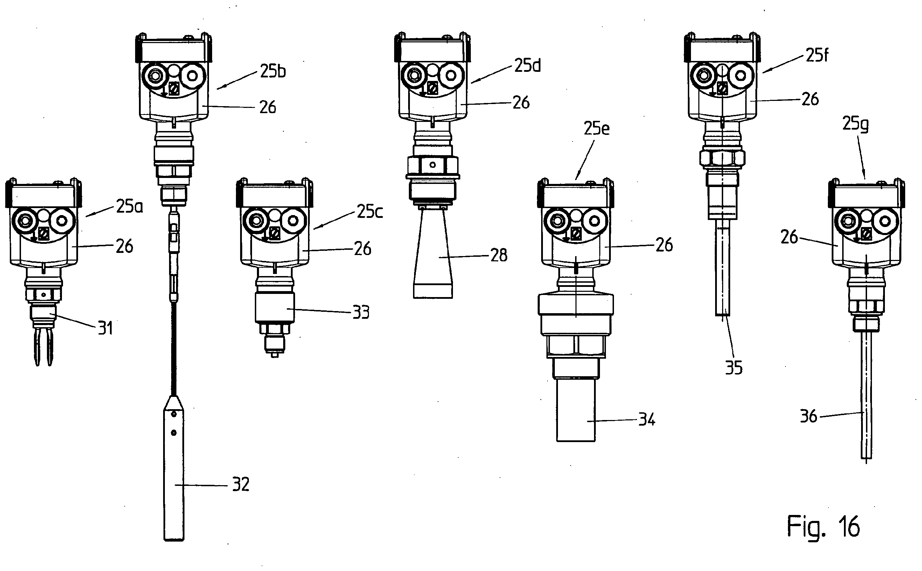

In der Fig. 8 wird der große Vorteil, der sich in der Modularität des Systems begründet, deutlich. Im wesentlichen zeigt die Fig. 8 einen gegenüber dem Mikrowellensensor der Fig. 7 nur geringfügig abgeänderten Sensor, obwohl es sich bei dem in Fig. 8 dargestellten Sensor um einen TDR-Sensor handelt. Waren gemäß dem Stand der Technik, um einen Sensor umzurüsten, erhebliche Änderungen sowohl an der Elektronik als auch an den mechanischen Bauteilen des Sensors erforderlich, so hat sich im vorliegenden Falle die Umrüstung im wesentlichen auf den Austausch des Sensorelements reduziert. Eine derart einfache Sensorumrüstung ist, wie bereits ausgeführt, auf die Vereinheitlichung der Abmessungen der sich entsprechenden mechanischen und der elektronischen Baueinheiten gemäß der vorliegenden Erfindung zurückzuführen.

In der Fig. 8 werden aufgrund der Schnittdarstellung die einzelnen Komponenten deutlicher sichtbar. Wie bereits angedeutet wurde hier für den TDR-Sensor gegenüber dem Mikrowellensensor der Fig. 7 die Hornantenne 41 durch eine Stab- oder Seilsonde 43 ersetzt. Die Stab- oder Seilsonde befindet sich passgenau in den Prozessanschluss 32 eingefügt und wird von der Digitalplatine 101 mit Signalen gespeist, bzw. stellt die reflektierten Signale der Digitalplatine zur weiteren Verarbeitung zur Verfügung. Wie hier zu erkennen ist, ist der Prozessanschluss 32 mehrteilig aufgebaut, wobei die einzelnen Teile durch O-Ringe gegeneinander abgedichtet sind, um einen Flüssigkeits- oder Gasaustausch mit dem Sensorgehäuseinnenraum oder der Umgebung zu vermeiden.

Der Prozessanschluss 32 ist seinerseits in das Gehäuse 22 eingefügt und ebenfalls mit einem O-Ring in der Fuge zum Gehäuse abgedichtet. Das Gehäuse 22 weist zumindest einen Innenraum auf, in den das Innengehäuse 28 eingefügt ist, das die Sensorelektroniken Digitalplatine 101, Netzteil 161 und Sensorelektronikeinheit 71 aufnimmt. Das Gehäuse ist an seiner Oberseite mit dem Gehäusedeckel 22' verschließbar und gegen das Gehäuse 22 mit einem O-Ring abgedichtet. In den Gehäusedeckel ist in der vorliegenden Ausführungsform ein Anzeige-Bedienmodul integriert, welches über die Schleifkontakte 51 mit der Sensorelektronik in Verbindung steht.

## Patentansprüche

1. Vorrichtung zur Bestimmung einer physikalischen Prozessgrösse umfassend
- eine erste Sensoreinheit (41-48) zum Erfassen einer bestimmten physikalischen Prozessgrösse und zum Wandeln dieser Prozessgrösse in ein elektrisches Messsignal, wobei der ersten Sensoreinheit (41-48) ein erstes Messprinzip zugrunde liegt,
- eine Auswerteeinheit (10) zum Auswerten und Generieren eines physikalischen Prozessgrösse repräsentierenden Prozessgrössensignals aus dem elektrischen Messsignal der Sensoreinheit (41-48),
- eine Kommunikationseinheit (13) zur Ausgabe des Prozessgrössensignals,
- eine Spannungsversorgungseinheit (16), die zur Spannungsversorgung der Vorrichtung zur Bestimmung der physikalischen Prozessgrösse dient,
- eine Gehäuseeinheit (22 ; 23 ; 24), die zur Aufnahme zumindest mehrerer Einheiten aus der Gruppe von Einheiten bestehend aus Auswerteeinheit (10), Kommunikationseinheit (13) und Spannungsversorgungseinheit (16) ausgebildet ist, wobei die Gehäuseeinheit (22 ; 23 ; 24) ein Aufnahmeteil mit elektrischen und mechanischen Anschlüssen umfasst, in das ein Anzeige-und Bedienmodul (19) lösbar anbringbar ist, und
- eine Befestigungseinheit (31 ; 32 ; 33) zum Anbringen der Vorrichtung zur Bestimmung der physikalischen Prozessgrösse an einem Behälter oder Wandteil,
wobei zumindest eine Einheit aus der Gruppe von Einheiten bestehend aus Auswerteeinheit (10), Kommunikationseinheit (13), Spannungsversorgungseinheit (16), Gehäuseeinheit (22 ; 23 ; 24) und Befestigungseinheit (31 ; 32 ;33) derart ausgestaltet und standardisiert ist, dass die Vorrichtung mit einer zweiten Sensoreinheit anstatt der ersten Sensoreinheit mechanisch koppelbar und betreibbar ist, wobei das der zweiten Sensoreinheit zugrunde liegende Messprinzip verschieden ist von dem ersten Messprinzip, das der ersten Sensoreinheit zugrunde liegt.

2. Vorrichtung nach Anspruch 1,
wobei eine Sensorelektronikeinheit (7) zum elektronischen Aufbereiten des elektrischen Messsignals der Sensoreinheit (41-48) in ein digitales Messsignal zwischen der Sensoreinheit (41-48) und der Auswerteeinheit (10) zwischengeschaltet ist.

3. Vorrichtung nach Anspruch 1,
wobei die Standardisierung der Einheiten (10 ; 13 ; 16 ; 22-24 ; 31-33 ; 41-48) die mechanischen Anschlüsse der Einheiten (10 ; 13 ; 16 ; 22-24 ; 31-33 ; 41-48) untereinander umfasst.

4. Vorrichtung nach einem der Ansprüche 1-3,
wobei die Standardisierung der Einheiten (10 ; 13 ; 16 ; 22-24 ; 31-33 ; 41-48) die elektrischen Anschlüsse der Einheiten (10 ; 13 ; 16 ; 22-24 ; 31-33 ; 41-48) untereinander umfasst.

5. Vorrichtung nach einem der Ansprüche 1-4,
wobei die Spannungsversorgungseinheit (16) aus einer Gruppe von standardisierten Spannungsversorgungseinheiten (161 ; 162 ; 163) wählbar ist, wobei die Gruppe von standardisierten Spannungsversorgungseinheiten(161 ; 162 ; 163) zumindest eine Spannungsversorgungseinheit(161) zum Anschluss an eine Zweileiterschleife, eine Spannungsversorgungseinheiten (162) zum Anschluss an eine Vierleiterschleife oder eine Spannungsversorgungseinheiten (163) zum Anschluss an ein Digitalbussystem umfasst, und wobei diese verschiedenen Spannungsversorgungseinheiten (161 ; 162 ; 163) standardisierte Abmessungen zum Anschluss in einer der Versionen von modularen Vorrichtungen aufweisen.

6. Vorrichtung nach einem der Ansprüche 1-5,
wobei die Auswerteeinheit (10) derart ausgestaltet und standardisiert ist, dass sie mit Sensoreinheiten (41-48) betreibbar ist, die auf der Grundlage unterschiedlicher Messprinzipien arbeiten.

7. Vorrichtung nach einem der Ansprüche 1-6,
wobei die Kommunikationseinheit (13) derart ausgestaltet und standardisiert ist, dass sie mit Sensoreinheiten (41-48) betreibbar ist, die auf der Grundlage unterschiedlicher Messprinzipien arbeiten.

8. Vorrichtung nach Anspruch 7,
wobei die Kommunikationseinheit (13) zumindest eine IIC-Bus-Schnittstelle aufweist, an die eine Anzeige-und Bedieneinheit (19) oder ein Computer anschliessbar ist.

9. Vorrichtung nach einem der Ansprüche 1-8,
wobei die Gehäuseeinheit (22 ; 23 ; 24) zumindest mehrere Einheiten aus der Gruppe von Einheiten zumindest bestehend aus der Auswerteeinheit (10), der Kommunikationseinheit (13) und der Spannungsversorgungseinheit (16) aufnimmt.

10. Vorrichtung nach einem der Ansprüche 1-9,
wobei die Gehäuseeinheit (22 ; 23 ; 24) eine Aufnahmeeinrichtung zur lösbaren Befestigung eines Anzeige- und Bedienmoduls (19) aufweist.

11. Vorrichtung nach Anspruch 10,
wobei die Aufnahmeeinrichtung derart ausgestaltet ist, dass das Anzeige-und Bedienmodul (19) in verschiedenen Positionen an der Gehäuseeinheit (22 ; 23 ; 24) lösbar befestigbar ist.

12. System zur Herstellung verschiedener Versionen einer modular aufgebauten Vorrichtung zur Bestimmung einer physikalischen Prozessgrösse nach einem der Ansprüche 1 - 11, wobei
die physikalische Prozessgrösse auf der Grundlage zumindest zweier verschiedener Messprinzipien bestimmt wird, umfassend :
- eine Anzahl von Sensoreinheiten (41-48), wobei jede Sensoreinheit (41-48) zum Erfassen einer bestimmten physikalischen Prozessgrösse und zum Wandeln dieser Prozessgrösse in ein elektrisches Messsignal ausgestaltet ist, und wobei sich zumindest zwei der Anzahl von Sensoreinheiten (41-48) in dem ihnen zugrunde liegenden Messprinzip unterscheiden ;
- zumindest eine Auswerteeinheit (10) zum Auswerten und Generieren eines die physikalische Prozessgrösse repräsentierenden Prozessgrössensignals aus dem Messsignal einer Sensoreinheit (41-48), wobei die Auswerteeinheit (10) zum Verbinden mit einer oder mehreren der Sensoreinheiten (41-48) ausgebildet und standardisiert ist;
- zumindest eine Kommunikationseinheit (13) zur Ausgabe des Prozessgrössensignals, wobei die Kommunikationseinheit (13) zum Verbinden mit einer oder mehreren der Auswerteeinheiten (10) ausgebildet und standardisiert ist;
- zumindest eine Spannungsversorgungseinheit (16), die zur Spannungsversorgung der Vorrichtung zur Bestimmung einer physikalischen Prozessgrösse dient, wobei die Spannungsversorgungseinheit (16) zur Spannungsversorgung zumindest zweier Versionen einer modularen Vorrichtung (21 ; 22 ; 23) ausgebildet und standardisiert ist ;
- zumindest eine Gehäuseeinheit (22 ; 23 ; 24), die zur Aufnahme zumindest mehrerer Einheiten aus der Gruppe von Einheiten bestehend aus zumindest der Auswerteeinheit (10), der Kommunikationseinheit (13) und der Spannungsversorgungseinheit (16) ausgebildet und standardisiert ist; und
- eine Anzahl von Befestigungseinheiten (31; 32; 33) zum Anbringen der Vorrichtung zur Bestimmung einer physikalischen Prozessgrösse an einem Behälter- oder Wandteil, wobei die Befestigungseinheiten (31 ; 32 ;33) sich in Hinblick auf die Gegebenheiten am Behälter oder Wandteil unterscheiden.

13. System nach Anspruch 12,
wobei das System des Weiteren zumindest eine Sensorelektronikeinheit (7) zum elektronischen Aufbereiten des elektrischen Messsignals einer Sensoreinheit (41-48) in ein digitales Messsignal aufweist, wobei zumindest eine der Sensorelektronikeinheiten (7) derart ausgestaltet und standardisiert ist, dass sie mit zumindest zwei sich unterscheidenden Sensoreinheiten (41-48) verbindbar ist.

14. System nach Anspruch 12 oder 13,
wobei die Sensorelektronikeinheit (7) und die Auswerteeinheit (10) in einem Modul integriert sind.

15. System nach einem der Ansprüche 12-14,
wobei die Sensorelektronikeinheit (7) und die Auswerteeinheit (10) auf einer oder mehreren Platinen untergebracht sind.

16. System nach einem der Ansprüche 12-15,
wobei die zumindest eine Gehäuseeinheit (22 ; 23 ; 24) zur Aufnahme zumindest mehrerer Einheiten aus der Gruppe von Einheiten bestehend aus zumindest der Sensorelektronikeinheit (7), der Auswerteeinheit (10), der Kommunikationseinheit (13) und der Spannungsversorgungseinheit (16) ausgebildet und standardisiert ist.

17. System nach einem der Ansprüche 12-16,
wobei die Anzahl der sich unterscheidenden Sensoreinheiten (41-48) zur Bestimmung der physikalischen Prozessgrösse zumindest zwei sich unterscheidende Sensoreinheiten (41-48) umfasst, die jeweils auf einem der folgenden Messprinzipien
beruhen :
- Laufzeitmessung von frei abgestrahlten oder geführten und an einem Füllgut reflektierten elektromagnetischen Wellen wie Mikrowellen oder Ultraschallwellen,
- Messung einer Kapazität eines Füllguts,
- Messung eines hydrostatischen Drucks oder eines hydrostatischen Differenzdrucks,
- Grenzstandmessung,
- Temperaturmessung,
- Durchflussmessung.

18. System nach einem der Ansprüche 12-17, wobei mehrere Gehäuseeinheiten (22 ; 23 ; 24) vorhanden sind, die jeweils für einen spezifischen Einsatzzweck individualisiert sind, aber zum Koppeln mit allen Sensoreinheiten (41-48) ausgebildet und standardisiert sind.

19. System nach einem der Ansprüche 12-18,
wobei die Gehäuseeinheiten (22; 23; 24) sich durch das verwendete Material unterscheiden.

20. System nach einem der Ansprüche 12-19,
wobei die Gehäuseeinheiten (22; 23; 24) sich durch die Anschlussausbildungen für Fernverbindungen unterscheiden.

21. System nach einem der Ansprüche 12-20,
wobei die einzelnen Sensoreinheiten (41-48) der Anzahl von Sensoreinheiten für einen spezifischen Einsatzzweck individualisiert sind, aber zum Koppeln mit allen Auswerteeinheiten (10) ausgebildet und standardisiert sind.

22. System nach einem der Ansprüche 12-21,
wobei die Anzahl von Sensoreinheiten aus der Gruppe bestehend aus mehreren der folgenden Komponenten wählbar ist:
a) eineHornantenne (41) und zugehöriger Elektronik zum Aussenden und Empfangen von Ultraschall-oder Mikrowellen,
b) eine Stabantenne (43) und zugehöriger Elektronik zum Aussenden und Empfangen von Ultraschall-oder Mikrowellen,
c) eine Schwinggabel (47) und zugehöriger Elektronik,
d) eine kapazitive Messsonde (48) und zugehöriger Elektronik,
e) ein Temperatursensor und zugehöriger Elektronik,
f) ein Drucksensor und zugehöriger Elektronik.

23. System nach einem der Ansprüche 12-22, wobei die Kommunikationseinheit (13) zur digitalen Kommunikation mit einem Bus- System ausgebildet ist.

24. System nach einem der Ansprüche 12-23, wobei die Kommunikationseinheit (13) zur Kommunikation über eine Zweileiter- Schleife ausgebildet ist.

25. System nach einem der Ansprüche 12-24, wobei das System mehrere Spannungsversorgungseinheiten (161 ; 162) umfasst, die zum Anschluss an eine Zweileiterschleife, eine Vierleiterschleife oder ein Digitalbussystem individualisiert sind, wobei diese verschiedenen Spannungsversorgungseinheiten (161 ;162) standardisierte Abmessungen zum Anschluss in einer der Versionen von modularen Vorrichtungen aufweisen.

26. System einem der Ansprüche 12-25, wobei eine der Spannungsversorgungseinheiten (161 ; 162) derart ausgelegtist; dass nachgeschalteten Einheiten mit einer Spannung in Höhe von 3V oder 5V versorgt werden können.

27. System einem der Ansprüche 12-26,
wobei das System des Weiteren ein Anzeige-und Bedienmodul (19) umfasst, das an zumindest mehreren sich unterscheidenden Gehäuseeinheiten (22 ; 23 ; 23) lösbar anbringbar ist und hierfür entsprechend ausgebildet und standardisiert ist.

28. System nach Anspruch 27,
wobei das Anzeige-und Bedienmodul (19) eine Befestigungseinrichtung und eine elektrische Verbindungseinrichtung umfasst, wobei die Befestigungseinrichtung mit einer standardisierten Aufnahmeeinrichtung an den Gehäuseeinheiten koppelbar ist, und wobei die elektrische Verbindungseinrichtung mit einer hiermit korrespondierenden elektrischen Verbindungseinrichtung an den Gehäuseeinheiten zu paaren ist.

29. System nach Anspruch 27 oder 28,
wobei das Anzeige-und Bedienmodul (19) in unterschiedlichen Positionen an den Gehäuseeinheiten lösbar befestigbar ist.

30. System nach einem der Ansprüche 12-29,
wobei ein oder mehrere Software-Module zum Betreiben einer der Einheiten aus der Gruppe von Einheiten bestehend aus zumindest der Sensorelektronikeinheit (7), der Auswerteeinheit (10), der Kommunikationseinheit (13) und der Spannungsversorgungseinheit (16) zur Verwendung in zumindest zwei verschiedenen Versionen von modular aufgebauten Vorrichtung zur Bestimmung einer physikalischen Prozessgrösse standardisiert ist.

## Claims

1. Apparatus for determining a physical process quantity, comprising:
- a first sensor unit (41-48) for detecting a specific physical process quantity and for converting the process quantity into an electrical measuring signal, wherein the first sensor unit (41-48) is based on a first measuring principle;
- an evaluation unit (10) for evaluating and generating a process quantity signal representing the physical process quantity from the electrical measuring signal of the sensor unit (41-48);
- a communication unit (13) for outputting the process quantity signal,
- a voltage supply unit (16) which serves to supply voltage to the apparatus for determining the physical process quantity;
- a housing unit (22; 23; 24), which is designed to accommodate at least a plurality of units from the group of units comprising evaluation unit (10), communication unit (13) and voltage supply unit (16), wherein the housing unit (22; 23; 24) comprises a receiving portion having electrical and mechanical connections in which a display and operating module (19) can be detachably mounted;
- a fastening unit (31; 32; 33) for mounting the apparatus to a container or wall portion for determining the physical process quantity,
wherein at least one unit from the group of units comprising evaluation unit (10), communication unit (13), voltage supply unit (16), housing unit (22; 23; 24) and fastening unit (31; 32; 33) is configured and standardized in such a way that the apparatus can be mechanically coupled and operated with a second sensor unit instead of the first sensor unit, wherein the measuring principle, on which the second sensor unit is based, is different from the first measuring principle, on which the first sensor unit is based.

2. Apparatus according to claim 1,
wherein the sensor electronics unit (7) for electronically processing the electrical measuring signal of the sensor unit (41-48) into a digital measuring signal is interconnected between the sensor unit (41-48) and the evaluation unit (10).

3. Apparatus according to claim 1,
wherein the standardization of the units (10; 13; 16; 22-24; 31-33; 41-48) comprises the mechanical connections of the units (10; 13; 16; 22-24; 31-33; 41-48) among each other.

4. Apparatus according to one of claims 1 to 3,
wherein the standardization of the units (10; 13; 16; 22-24; 31-33; 41-48) comprises the electrical connections of the units (10; 13; 16; 22-24; 31-33; 41-48) among each other.

5. Apparatus according to one of claims 1 to 4,
wherein the voltage supply unit (16) is selectable from a group of standardized voltage supply units (161; 162; 163), wherein the group of standardized voltage supply units (161; 162; 163) comprises at least one voltage supply unit (161) for connection to a two-wire loop, a voltage supply unit (162) for connection to a four-wire loop or a voltage supply unit (163) for connection to a digital bus system, and wherein the different voltage supply units (161; 162; 163) comprise standardized dimensions for connection in one of the versions of modular apparatuses.

6. Apparatus according to one of claims 1 to 5,
wherein the evaluation unit (10) is configured and standardized in such a way that it is operable with sensor units (41-48) that work on the basis of different measuring principles.

7. Apparatus according to one of claims 1 to 6,
wherein the communication unit (13) is configured and standardized in such a way that it is operable with sensor units (41-48) that work on the basis of different measuring principles.

8. Apparatus according to claim 7,
wherein the communication unit (13) comprises at least one IIC bus interface, to which a display and operating unit (19) or a computer can be connected.

9. Apparatus according to one of claims 1 to 8,
wherein the housing unit (22; 23; 24) accommodates at least a plurality of units from the group of units comprising at least the evaluation unit (10), the communication unit (13) and the voltage supply unit (16).

10. Apparatus according to one of claims 1 to 9,
wherein the housing unit (22; 23; 24) comprises a receiving device for detachably fastening a display and operating module (19).

11. Apparatus according to claim 10,
wherein the receiving device is configured in such a way that the display and operating module (19) can be detachably fastened in different positions to the housing unit (22; 23; 24).

12. System for manufacturing different versions of a modularly structured apparatus for determining a physical process quantity according to one of claims 1 to 11,
wherein the physical process quantity is determined on the basis of at least two different measuring principles, comprising:
- a number of sensor units (41-48), wherein each sensor unit (41-48) is configured to detect a specific physical process quantity and to convert the process quantity into an electrical measuring signal, and wherein at least two of the number of sensor units (41-48) are distinguished from one another by the measuring principle on which they are based;
- at least one evaluation unit (10) for evaluating and generating a physical process quantity signal representing the physical process quantity from the measuring signal of a sensor unit (41-48), wherein the evaluation unit (10) is designed and standardized to connect to one or more of the sensor units (41-48);
- at least one communication unit (13) for outputting the process quantity signal, wherein the communication unit (13) is designed and standardized to connect to one or more of the evaluation units (10);
- at least one voltage supply unit (10), which serves to supply voltage to the apparatus for determining the physical process quantity, wherein the voltage supply unit (16) is designed and standardized to supply voltage to at least two versions of a modular apparatus (21; 22; 23);
- at least one housing unit (22; 23; 24), which is designed and standardized to accommodate at least a plurality of units from the group of units comprising at least the evaluation unit (10), the communication unit (13) and the voltage supply unit (16);
- a number of fastening units (31; 32; 33) for mounting the apparatus to a container or wall portion for determining the physical process quantity, wherein the fastening units (31; 32; 33) are different with respect to the conditions on the vessel or wall portion.

13. System according to claim 12,
wherein the system further comprises at least one sensor electronics unit (7) for electronically processing the electrical measuring signal of a sensor unit (41-48) into a digital measuring signal, wherein at least one of the sensor electronics units (7) is configured and standardized in such a way that it is connectable to at least two differing sensor units (41-48).

14. System according to claim 12 or 13,
wherein the sensor electronics unit (7) and the evaluation unit (10) are integrated in one module.

15. System according to one of claims 12 to 14,
wherein the sensor electronics unit (7) and the evaluation unit (10) are accommodated on one or a plurality of printed circuit boards.

16. System according to one of claims 12 to 15,
wherein the at least one housing unit (22; 23; 24) is configured and standardized to accommodate at least a plurality of units from the group of units comprising at least the sensor electronics unit (7), the evaluation unit (10), the communication unit (13) and the voltage supply unit (16).

17. System according to one of claims 12 to 16,
wherein the number of differing sensor units (41-48) for determining a physical measuring quantity comprises at least two differing sensor units (41-48) each based on one of the following measuring principles:
- transit-time measurement of freely radiated or guided and on a filling material reflected electromagnetic waves such as microwaves or ultrasonic waves,
- measurement of a capacitance of a filling material,
- measurement of a hydrostatic pressure or a hydrostatic differential pressure,
- limit level measurement,
- temperature measurement,
- flow measurement.

18. System according to one of claims 12 to 17,
wherein a plurality of housing units (22; 23; 24) are present, each individually designed for a specific purpose of use but configured and standardized to couple with all sensor units (41-48).

19. System according to one of claims 12 to 18,
wherein the housing units (22; 23; 24) are distinguished by the material used.

20. System according to one of claims 12 to 19,
wherein the housing units (22; 23; 24) are distinguished by connection forms for remote connections.

21. System according to one of claims 12 to 20,
wherein the individual sensor units (41-48) of the number of sensor units are individualized for a specific purpose, but designed and standardized to couple with all evaluation units (10).

22. System according to one of claims 12 to 21,
wherein the number of sensor units can be selected from the group comprising a plurality of the following components:
a) a horn antenna (41) and associated electronics for transmitting and receiving ultrasonic or microwave waves,
b) a rod antenna (43) and associated electronics for transmitting and receiving ultrasonic or microwave waves,
(c) a tuning fork (47) and associated electronics,
(d) a capacitive measuring probe (48) and associated electronics,
(e) a temperature sensor and associated electronics,
(f) a pressure sensor and associated electronics.

23. System according to one of claims 12 to 22,
wherein the communication unit (13) is designed for digital communication with a bus system.

24. System according to one of claims 12 to 23,
wherein the communication unit (13) is designed for communication using a two-wire loop.

25. System according to one of claims 12 to 24,
wherein the system comprises a plurality of voltage supply units (161; 162) which are individualized to connect to a two-wire loop, a four-wire loop or a digital bus system, wherein the different voltage supply units (161; 162) comprise standardized dimensions for connection in one of the versions of the modular apparatuses.

26. System according to one of claims 12 to 25,
wherein one of the voltage supply units (161; 162) is designed in such a way that the downstream units can be supplied with a voltage of 3V or 5V.

27. System according to one of claims 12 to 26,
wherein the system further comprises a display and operating module (19) that is designed and standardized so as to be detachably mounted to at least a plurality of different housing units (22; 23; 23).

28. System according to claim 27,
wherein the display and operating module (19) comprises an attachment device and an electrical connection device, wherein the attachment device can be coupled with a standardized receiving device at the housing units, and wherein the electrical connection device can be paired with a corresponding electrical connection device at the housing units.

29. System according to claim 27 or 28,
wherein the display and operating module (19) can be detachably fastened in different positions to the housing units.

30. System according the one of claims 12 to 29,
wherein one or more software modules for operating one the units from the group of units comprising at least the sensor electronics unit (7), the evaluation unit (10), the communication unit (13) and the voltage supply unit (16) is standardized for use in at least two different versions of modularly structured apparatus for determining a physical process quantity.

## Revendications

1. Appareil de détermination d'une grandeur physique de processus comprenant :
- une première unité de capteur (41-58) pour saisir une grandeur physique de processus déterminée et pour convertir cette grandeur de processus en un signal de mesure électrique, dans lequel un premier principe de mesure sous-tend la première unité de capteur (41-58),
- une unité de traitement (10) pour traiter et générer un signal de grandeur de processus représentant une grandeur physique de processus à partir du signal de mesure électrique de l'unité de capteur (41-48),
- une unité de communication (13) pour émettre le signal de grandeur de processus,
- une unité d'alimentation en tension (16), laquelle sert à alimenter en tension l'appareil de détermination de la grandeur physique de processus,
- une unité de boîtier (22 ; 23 ; 24), laquelle est réalisée pour loger au moins plusieurs unités issues du groupe d'unités constitué par l'unité de traitement (10), l'unité de communication (13) et l'unité d'alimentation en tension (16), dans lequel l'unité de boîtier (22 ; 23 ; 24) comprend une partie de logement dotée de raccordements électriques et mécaniques, au sein de la laquelle un module d'affichage et de commande (19) peut être agencé de manière amovible,
- une unité de fixation (31 ; 32 ; 33) pour l'agencement de l'appareil de détermination de la grandeur physique de processus à un conteneur ou à une partie de paroi,
dans lequel au moins une unité issue du groupe d'unités constitué par l'unité de traitement (10), l'unité de communication (13), l'unité d'alimentation en tension (16), l'unité de boîtier (22 ; 23 ; 24) et l'unité de fixation (31 ; 32 ; 33) est configurée et normalisée de telle sorte que l'appareil peut être mécaniquement couplé et utilisé avec une deuxième unité de capteur à la place de la première unité de capteur, dans lequel le principe de mesure sous-tendant la deuxième unité de capteur est différent du premier principe de mesure sous-tendant la première unité de capteur.

2. Appareil selon la revendication 1, dans lequel une unité d'électronique de capteur (7) pour le traitement électronique du signal de mesure électrique de l'unité de capteur (41-48) en un signal de mesure numérique est interposée entre l'unité de capteur (41-48) et l'unité de traitement (10) .

3. Appareil selon la revendication 1, dans lequel la normalisation des unités (10 ; 13 ; 16 ; 22-24 ; 31-33 ; 41-48) comprend les raccordements mécaniques des unités (10 ; 13 ; 16 ; 22-24 ; 31-33 ; 41-48) les unes aux autres.

4. Appareil selon l'une des revendications 1 à 3, dans lequel la normalisation des unités (10 ; 13 ; 16 ; 22-24 ; 31-33 ; 41-48) comprend les raccordements électriques des unités (10 ; 13 ; 16 ; 22-24 ; 31-33 ; 41-48) les unes aux autres.

5. Appareil selon l'une des revendications 1 à 4, dans lequel l'unité d'alimentation en tension (16) peut être sélectionnée parmi un groupe d'unités d'alimentation en tension normalisées (161 ; 162 ; 163), dans lequel le groupe d'unités d'alimentation en tension normalisées (161 ; 162 ; 163) comprend au moins une unité d'alimentation en tension (161) pour raccordement à une boucle deux fils, une unité d'alimentation en tension (162) pour raccordement à une boucle quatre fils ou une unité d'alimentation en tension (163) pour raccordement à un système de bus numérique, et dans lequel ces différentes unités d'alimentation en tension (161 ; 162 ; 163) possèdent des dimensions normalisées pour le raccordement dans une des versions d'appareils modulaires.

6. Appareil selon l'une des revendications 1 à 5, dans lequel l'unité de traitement (10) est configurée et normalisée de telle sorte qu'elle peut être utilisée avec les unités de capteur (41-48) fonctionnant sur la base des différents principes de mesure.

7. Appareil selon l'une des revendications 1 à 6, dans lequel l'unité de communication (13) est configurée et normalisée de telle sorte qu'elle peut être utilisée avec les unités de capteur (41-48) fonctionnant sur la base des différents principes de mesure.

8. Appareil selon la revendication 7, dans lequel l'unité de communication (13) comporte une interface de bus IIC, à laquelle peut être raccordé un ordinateur ou une unité d'affichage et de commande (19).

9. Appareil selon l'une des revendications 1 à 8, dans lequel l'unité de boîtier (22 ; 23 ; 24) accueille au moins plusieurs unités issues du groupe d'unités constitué par l'unité de traitement (10), l'unité de communication (13) et de l'unité d'alimentation en tension (16).

10. Appareil selon l'une des revendications 1 à 9, dans lequel l'unité de boîtier (22 ; 23 ; 24) comporte un dispositif de logement pour la fixation amovible d'un module d'affichage et de commande (19).

11. Appareil selon la revendication 10, dans lequel le dispositif de logement est configuré de telle sorte que le module d'affichage et de commande (19) peut être fixé de manière amovible dans différentes positions à l'unité de boîtier (22 ; 23 ; 24).

12. Système de fabrication de différentes versions d'un appareil de construction modulaire destiné à la détermination d'une grandeur physique de processus selon l'une des revendications 1 à 11, dans lequel la grandeur physique de processus est déterminée sur la base d'au moins deux principes de mesure différents, comprenant :
- un nombre d'unités de capteur (41-48), dans lequel chaque unité de capteur (41-48) est configurée pour saisir une grandeur physique de processus déterminée et pour convertir cette grandeur de processus en un signal de mesure électrique, et dans lequel au moins deux du nombre d'unités de capteur (41-48) diffèrent dans leur principe de mesure sous-jacent ;
- au moins une unité de traitement (10) pour traiter et générer un signal de grandeur de processus représentant une grandeur physique de processus à partir du signal de mesure électrique de l'unité de capteur (41-48), dans lequel l'unité de traitement (10) est réalisée et normalisée pour la connexion à une ou plusieurs des unités de capteur (41-48) ;
- au moins une unité de communication (13) pour émettre le signal de grandeur de processus, dans lequel l'unité de communication (13) est réalisée et normalisée pour la connexion à une ou plusieurs des unités de traitement (10) ;
- au moins une unité d'alimentation en tension (16), laquelle sert à alimenter en tension l'appareil pour la détermination d'une grandeur physique de processus, dans lequel l'unité d'alimentation en tension (16) est réalisée et normalisée pour alimenter en tension au moins deux versions d'un appareil modulaire (21 ; 22 ; 23) ;
- au moins une unité de boîtier (22 ; 23 ; 24), laquelle est réalisée et normalisée pour le logement d'au moins plusieurs unités issues du groupe d'unités constitué par au moins l'unité de traitement (10), l'unité de communication (13) et l'unité d'alimentation en tension (16) ; et
- un nombre d'unités de fixation (31 ; 32 ; 33) pour l'agencement de l'appareil de détermination d'une grandeur physique de processus à un conteneur ou à une partie de paroi, dans lequel les unités de fixation (31 ; 32 ; 33) diffèrent en regard des conditions sur le conteneur ou la partie de paroi.

13. Système selon la revendication 12, dans lequel le système comporte en outre au moins une unité d'électronique de capteur (7) pour le traitement électronique du signal de mesure électrique de l'unité de capteur (41-48) en un signal de mesure numérique, dans lequel au moins une des unités d'électronique de capteur (7) est configurée et normalisée de telle sorte qu'elle peut être connectée avec au moins deux unités de capteur (41-48) différentes l'une de l'autre.

14. Système selon la revendication 12 ou 13, dans lequel l'unité d'électronique de capteur (7) et l'unité de traitement (10) sont intégrées dans un module.

15. Système selon l'une des revendications 12 à 14, dans lequel l'unité d'électronique de capteur (7) et l'unité de traitement (10) sont disposées sur une ou plusieurs cartes de circuit imprimé.

16. Système selon l'une des revendications 12 à 15, dans lequel l'au moins une unité de boîtier (22 ; 23 ; 24) est configurée et normalisée de façon à accueillir au moins plusieurs unités issues du groupe d'unités constitué par au moins l'unité d'électronique de capteur (7), l'unité de traitement (10), l'unité de communication (13) et l'unité d'alimentation en tension (16).

17. Système selon l'une des revendications 12 à 16, dans lequel le nombre d'unités de capteur différentes (41-48) comprend pour la détermination de la grandeur physique de processus au moins deux unités de capteur différentes (41-48), lesquelles reposent respectivement sur un des principes de mesure suivants :
- mesure du temps de parcours d'ondes électromagnétiques comme des micro-ondes ou d'ondes ultrasonores, librement émises ou guidées et réfléchies sur un matériau de remplissage,
- mesure d'une capacité d'un matériau de remplissage,
- mesure d'une pression hydrostatique ou d'une pression différentielle hydrostatique,
- mesure de niveau,
- mesure de température,
- mesure de débit.

18. Système selon l'une des revendications 12 à 17, dans lequel plusieurs unités de boîtier (22 ; 23 ; 24) sont présentes, lesquelles sont respectivement individualisées pour une application spécifique, mais sont configurées et normalisées pour le couplage avec toutes les unités de capteur (41-48).

19. Système selon l'une des revendications 12 à 18, dans lequel les unités de boîtier (22 ; 23 ; 24) diffèrent par le matériau utilisé.

20. Système selon l'une des revendications 12 à 19, dans lequel les unités de boîtier (22; 23 ; 24) diffèrent par les moyens de raccord pour les connexions à distance.

21. Système selon l'une des revendications 12 à 20, dans lequel les unités de capteur individuelles (41-48) du nombre des unités de capteur sont individualisées pour une application spécifique, mais sont configurées et normalisées pour le couplage avec toutes les unités de capteur (10).

22. Système selon l'une des revendications 12 à 21, dans lequel le nombre des unités de capteur peut être sélectionné parmi le groupe constitué par plusieurs des composants suivants :
a) une antenne cône (41) et l'électronique associée pour l'émission et la réception d'ultrasons ou de micro-ondes,
b) une antenne fouet (43) et l'électronique associée pour l'émission et la réception d'ultrasons ou de micro-ondes,
c) des lames vibrantes (47) et l'électronique associée,
d) une sonde de mesure capacitive (48) et l'électronique associée,
e) un capteur de température et l'électronique associée,
f) un capteur de pression et l'électronique associée.

23. Système selon l'une des revendications 12 à 22, dans lequel l'unité de communication (13) est réalisée pour la communication numérique avec un système de bus.

24. Système selon l'une des revendications 12 à 23, dans lequel l'unité de communication (13) est réalisée pour la communication par le biais d'une boucle deux fils.

25. Système selon l'une des revendications 12 à 24, dans lequel le système comprend plusieurs unités d'alimentation en tension (161 ; 162), lesquelles sont individualisées pour le raccordement à une boucle deux fils, une boucle quatre fils ou un système de bus numérique, dans lequel ces différentes unités d'alimentation en tension (161 ; 162) possèdent des dimensions normalisées pour le raccordement dans une des versions d'appareils modulaires.

26. Système selon l'une des revendications 12 à 25, dans lequel une des unités d'alimentation en tension (161 ; 162) est disposée de telle sorte que des unités en aval peuvent être alimentées avec une tension d'une valeur de 3 V ou 5 V.

27. Système selon l'une des revendications 12 à 26, dans lequel le système comprend en outre un module d'affichage et de commande (19), lequel peut être agencé de manière amovible à au moins plusieurs unités de boîtier (22 ; 23 ; 24) différentes et est configuré et réalisé de manière correspondante à cet effet.

28. Système selon la revendication 27, dans lequel le module d'affichage et de commande (19) comprend un dispositif de fixation et un dispositif de raccordement électrique, dans lequel le dispositif de fixation peut être couplé aux unités de boîtier avec un dispositif de logement normalisé, et dans lequel le dispositif de raccordement électrique est à apparier aux unités de boîtier avec un dispositif de raccordement électrique correspondant.

29. Système selon la revendication 27 ou 28, dans lequel le module d'affichage et de commande (19) peut être fixé de manière amovible aux unités de boîtier dans différentes positions.

30. Système selon l'une des revendications 12 à 29, dans lequel un ou plusieurs modules de logiciel sont normalisés pour le fonctionnement d'une des unités issues du groupe d'unités constitué par au moins l'unité d'électronique de capteur (7), l'unité de traitement (10), l'unité de communication (13) et l'unité d'alimentation en tension (16) pour utilisation dans au moins deux versions différentes d'appareil de construction modulaire destiné à la détermination d'une grandeur physique de processus.
